(19) Europäisches Patentamt
European Patent Office
Office européen des brevets

(11) **EP 3 621 400 A1**

(12) **EUROPEAN PATENT APPLICATION**

(43) Date of publication:
**11.03.2020 Bulletin 2020/11**

(21) Application number: **19206599.3**

(22) Date of filing: **11.12.2015**

(51) Int Cl.:
**H04W 74/00** (2009.01)　　　**H04W 74/08** (2009.01)
**H04W 72/04** (2009.01)　　　**H04W 56/00** (2009.01)
**H04W 24/10** (2009.01)　　　**H04W 76/10** (2018.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.08.2015　PCT/KR2015/008095**

(62) Document number(s) of the earlier application(s) in accordance with Art. 76 EPC:
**15900487.8 / 3 332 597**

(71) Applicant: **Samsung Electronics Co., Ltd.
Gyeonggi-do 16677 (KR)**

(72) Inventors:
 • **Ingale, Mangesh Abhimanyu
  16677 Suwon-si (KR)**
 • **van Lieshout, Gert Jan
  16677 Suwon-si (KR)**
 • **Kim, Young-Bum
  16677 Suwon-si (KR)**
 • **Kwak, Yong-Jun
  16677 Suwon-si (KR)**
 • **Yeo, Jeong-Ho
  16677 Suwon-si (KR)**
 • **Lee, Ju-Ho
  16677 Suwon-si (KR)**

(74) Representative: **Nederlandsch Octrooibureau
P.O. Box 29720
2502 LS The Hague (NL)**

Remarks:
This application was filed on 31-10-2019 as a divisional application to the application mentioned under INID code 62.

(54) **METHOD AND APPARATUS FOR INITIAL ACCESS IN WIRELESS COMMUNICATION SYSTEM**

(57) The present disclosure relates to a pre-5th-Generation (5G) or 5G communication system to be provided for supporting higher data rates Beyond 4th-Generation (4G) communication system such as Long Term Evolution (LTE). Next generation of wireless cellular operation is expected to be deployed in higher frequency above 6 GHz (eg. 10 GHz ~ 100 GHz, also called mmWave and/or cmWave) due to availability of large amount of spectrum bandwidths. The physical layer of wireless cellular system in both DL and UL operating in mmWave/cmWave would be based on new air-interface different from that of LTE-A air-interface because the radio characteristics is different for mmWave/cmWave bands. The initial deployment of mmWave/cmWave system is expected to operate as non-standalone system to provide additional radio resources to the UE which would be connected to the LTE-A cell for coverage purpose. The present disclosure covers initial access aspects of a UE on such future wireless system.

FIG.1

EP 3 621 400 A1

**Description**

[Technical Field]

The present disclosure relates to a method and apparatus for initial access in wireless communication system.

[Background Art]

The present disclosure relates to a pre-5th-Generation (5G) or 5G communication system to be provided for supporting higher data rates Beyond 4th-Generation (4G) communication system such as Long Term Evolution (LTE).
To meet the demand for wireless data traffic having increased since deployment of 4G communication systems, efforts have been made to develop an improved 5G or pre-5G communication system. Therefore, the 5G or pre-5G communication system is also called a 'Beyond 4G Network' or a 'Post LTE System' or 'Next generation of International Mobile Telecommunication (IMT)-Advanced'.
The 5G communication system is considered to be implemented in higher frequency (mmWave) bands, e.g., 10GHz to 100GHz bands, so as to accomplish higher data rates. To decrease propagation loss of the radio waves and increase the transmission distance, the beamforming, massive Multiple-Input Multiple-Output (MIMO), Full Dimensional MIMO (FD-MIMO), array antenna, an analog beam forming, large scale antenna techniques are discussed in 5G communication systems.
In addition, in 5G communication systems, development for system network improvement is under way based on advanced small cells, cloud Radio Access Networks (RANs), ultra-dense networks, Device-to-Device (D2D) communication, wireless backhaul, moving network based on mobile relay, cooperative communication, Coordinated Multi-Points (CoMP), reception-end interference cancellation and the like.
In the 5G system, Hybrid FSK and QAM Modulation (FQAM) and Sliding Window Superposition Coding (SWSC) as an Advanced Coding Modulation (ACM), and Filter Bank Multi Carrier (FBMC), Non-Orthogonal Multiple Access (NOMA), and Sparse Code Multiple Access (SCMA) as an advanced access technology have been developed.

[Disclosure of Invention]

[Technical Problem]

The physical layer of wireless cellular system in both Downlink (DL) and Uplink (UL) operating in mmWave/cmWave would be based on new air-interface different from that of IMT-Advanced air-interface to meet the challenging requirements and providing enhanced mobile broadband user experience. For the sake of illustration of disclosed methods for initial access it is assumed the air-interface of next generation wireless cellular system would be based on Orthogonal Frequency Division Multiple-access (OFDMA) Radio Access Technology (RAT) in DL and UL. However the numerology (i.e. OFDM symbol duration, carrier spacing etc) of next generation RAT is assumed to be different from the OFDMA numerology of IMT-Advanced system. Meanwhile, next generation of IMT-Advanced wireless cellular system is expected to deliver several 100 Mbps to a few tens of Gbps user experienced data rates in comparison to wireless systems based on International Mobile Telecommunication (IMT)-Advanced. These very high data rates would be available ubiquitously across the coverage area. Apart from user experienced data rates next generation of wireless cellular system is expected to deliver on other requirements like peak data rate (few 10 of Gbps), reduced latency (down to 1 ms), better spectral efficiency compared to IMT-Advanced system and many other requirements. The next generation of wireless cellular system is foreseen to be deployed in higher frequency above 6 GHz (eg. 10 GHz ~ 100 GHz, also called mmWave and/or cmWave) due to availability of large amount of spectrum bandwidths.

[Solution to Problem]

To address the above-discussed requirements of 5G communication systems or Next generation of (IMT)-Advanced systems, it is a primary object to provide an apparatus and a method for initial access in wireless communication system.
In accordance with an aspect of the present disclosure, an apparatus of performing an initial access by a terminal in wireless communication system is provided. The apparatus includes a controller which is configured to transmit capability indication information indicating whether the terminal supports a dual connectivity mode and a high frequency capability support to a Primary Cell of Master eNodeB (MeNB), receive measurement configuration information including a frequency, a synchronization signal configuration and a measurement configuration from the Master eNodeB, determine a cell of a Secondary eNodeB (SeNB) based on the synchronization signal configuration information, transmit a measurement report message including a cell identifier for the determined cell of the secondary eNodeB and a beam index corresponding to highest signal strength via the master eNodeB, receive information related to a secondary cell group (SCG) configuration from the secondary eNodeB, and perform the initial access on the cell based on the information related to the SCG.

In accordance with an aspect of the present disclosure, an apparatus of performing an initial access by a terminal in wireless communication system is provided. The apparatus includes a controller which is configured to receive capability indication information indicating whether the terminal supports a dual connectivity mode and a high frequency capability support from a terminal, transmit measurement configuration information including a frequency, a synchronization signal configuration and a measurement gap configuration to a terminal, receive measurement report message related to a cell of the secondary eNodeB if the cell of the secondary eNodeB is determined based on the synchronization signal configuration information, wherein said measurement report message includes a cell identifier and a beam index corresponding to highest signal strength, and transmit information related to a secondary cell group (SCG) configuration from the master eNodeB to enable the terminal to perform the initial access on the cell based on the information related to the SCG.

Before undertaking the DETAILED DESCRIPTION below, it may be advantageous to set forth definitions of certain words and phrases used throughout this patent document: the terms "include" and "comprise," as well as derivatives thereof, mean inclusion without limitation; the "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases. For example the 5G communication systems or Next generation of IMT-Advanced systems is simply referred as next generation wireless system or next generation RAT throughout this patent document. Another example the terminal is referred as User Equipment (UE) throughout this patent.

[Brief Description of Drawings]

For a more complete understanding of the present disclosure and its advantages, reference is now made to the following description taken in conjunction with the accompanying drawings, in which like reference numerals represent like parts:

Figure 1 is illustration of deployment of next generation wireless system within the dual connectivity framework depicting the Radio Access Network (RAN) architecture.

Figure 2 is illustration of initial access procedure performed by an user equipment on a cell of next generation wireless system according to one embodiment of the present disclosure.

Figure 3a is illustration of initial access procedure performed by an user equipment on a cell of next generation wireless system according to another embodiment of the present disclosure.

Figure 3b is illustration of initial access procedure performed by an user equipment on a cell of next generation wireless system according to yet another embodiment of the present disclosure.

Figure 4a is illustration of one example of synchronization signal transmission and beam reference signal from a cell of next generation wireless system according to one embodiment of the present disclosure.

Figure 4b is illustration of another example of transmission of synchronization signal and beam reference signal from a cell of next generation of wireless system assuming analogue reception beamforming is applied at UE side.

Figure 5a is illustration of one example of Physical Random Access CHannel (PRACH) configuration provided to UE for random access on a cell of next generation wireless system according to one embodiment of the present disclosure.

Figure 5b is illustration of another example of PRACH configuration provided to UE for random access on a cell of next generation of wireless system.

Figures 6a to 6c are illustration of few examples of PRACH configuration provided to UE for random access on a cell of next generation wireless system according to another embodiment of the present disclosure.

Figure 7 is illustration of one example of random access response message transmitted to a UE from a cell of next generation wireless system according to one embodiment of the present disclosure.

Figure 8 is illustration of various steps performed by an user equipment during the initial access procedure on a cell of next generation wireless system according to one embodiment of the present disclosure.

Figure 9 is illustration of various steps performed by an user equipment during DL synchronization on a cell of next generation wireless system according to one embodiment of the present disclosure.

Figure 10 is illustration of various steps performed by an user equipment during random access procedure on a cell of next generation wireless system according to one embodiment of the present disclosure.

Figure 11 is illustration of various steps performed by a Master eNodeB (MeNB) of IMT-Advanced system for addition of a cell of next generation wireless system.

Figure 12 is illustration of various steps performed by a Secondary eNodeB (SeNB) for addition of a cell of next generation wireless system.

Figure 13 is illustration of two levels of cell mobility scenario for a User Equipment operating in dual connectivity mode served by MeNB of IMT-Advanced system and SeNB of next generation wireless system.

Figure 14 is illustration of cell level mobility scenario for a User Equipment served by plurality of DL coverage beams from plurality of cell(s) of next generation wireless system.

Figure 15a is block diagram of MeNB or SeNB depicting the hardware and software modules for realizing the methods proposed in the present disclosure.

Figure 15b is block diagram of UE depicting the hardware and software modules for realizing the methods proposed in the present disclosure.

[Mode for the Invention]

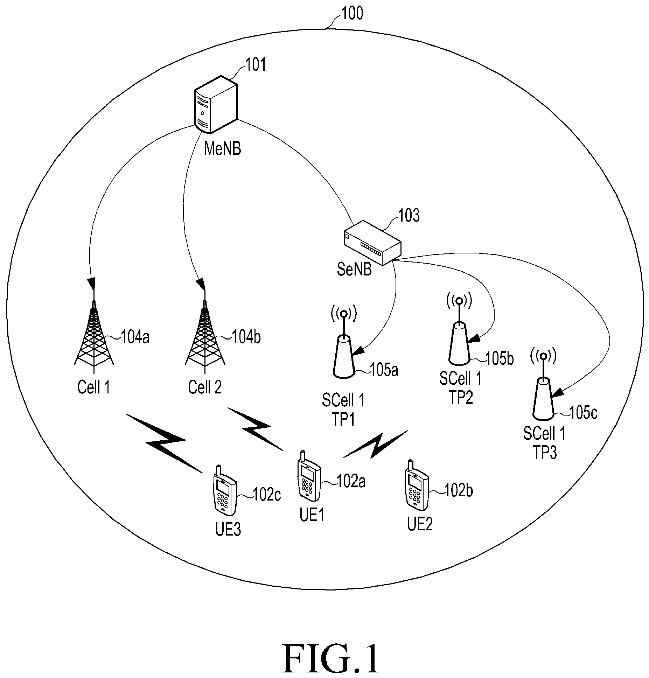

FIGs. 1 through 15, discussed below, and the various embodiments of the present disclosure used to describe the principles of the present disclosure in this patent document are by way of illustration only and should not be construed in any way to limit the scope of the disclosure. Those skilled in the art will understand that the principles of the present disclosure may be implemented in any suitably arranged communication technologies. Hereinafter, operation principles of exemplary embodiments of the present disclosure will be described in detail with reference to accompanying drawings. In the following description of the present disclosure, a detailed description of known configurations or functions incorporated herein will be omitted when it is determined that the detailed description may make the subject matter of the present disclosure unclear. Terms described later are defined in consideration of the functions of the present disclosure, but may vary according to the intention or convention of a user or operator. Therefore, the definitions should be made based on contents throughout the specifications.

In the present disclosure, the mmWave/cmWave band is considered common scenario for deployment of next generation RAT and hence the procedures are described taking the radio characteristics in those bands. However, in practical deployments it is possible to apply the air-interface of next generation wireless cellular system even below 10 GHz band, therefore the applicability of the next generation RAT and the procedure disclosed in the present disclosure should not be considered strictly limited to mmWave/cmWave bands. Since the radio characteristics is different for frequencies in the mmWave/cmWave bands compared to frequencies in sub 6 GHz bands, it is also expected next generation wireless cellular system would have native support for beamforming techniques for both broadcast and unicast transmissions towards UE to overcome short propagation distances of radio signals at mmWave/cmWave frequencies. Further, it is expected that the initial deployment of next generation wireless system operating in mmWave/cmWave bands would operate as non-standalone system to provide additional radio resources to the UE which would be connected to IMT-Advanced or previous generation system for coverage purpose. With the assumption that next generation wireless system would be added as a capacity layer to existing IMT-Advanced deployments then from the initial standardization phase perspective the RAN architecture would be based on Carrier Aggregation (CA) or Dual-Connectivity (DC) framework specified by 3rd Generation Partnership Project (3GPP).

The CA functionality would have the potential benefit of the central scheduler and could potentially result in more optimized performance. However, DC might be easier to implement, especially if the cell(s) of the next generation RAT is added to existing IMT-Advanced systems and would allow a larger decoupling between the two systems. The CA functionality is visible to Medium Access Control (MAC) and Physical (PHY) layer whereas the Radio Link Control (RLC) and Packet Data Convergence Protocol (PDCP) layers are transparent to CA. A common scheduler implemented at the MAC handles the resources scheduling on the carriers aggregated for the UE. However it is assumed that during standardization 3GPP would want full flexibility for defining a new MAC layer for the air-interface of the next generation RAT (i.e. no common MAC for IMT-Advanced air-interface and air-interface of next generation RAT). Therefore a DC approach is probably more logical where the eNodeB of the IMT-Advanced system takes the role of Master eNodeB (MeNB) and the eNodeB of the next generation system takes the role of Secondary eNodeB (SeNB) as shown in Figure 1. The tight integration of IMT-Advanced system and next generation wireless system described in the present disclosure is based on DC framework. Hence it seems obvious that split bearer DC architecture where an Evolved Packet System (EPS) bearer is split in the Radio Access Network (RAN) (i.e. RAN split DC architecture) should be supported. But if cell(s) of next generation RAT is to be added to existing systems, with such carriers handling huge traffic loads, it seems also clear that it is not always a good idea to have all traffic handled by such carriers going via the cell of IMT-Advanced system. This means EPS bearer split in the Core Network (CN) and S1-U between the SeNB and data gateway to handle several Gbps is essential (i.e. support for CN split of DC architecture). It is to be understood that applicability of methods disclosed in the present disclosure are also valid for CA framework and the consideration of DC framework should not be considered as the limiting case.

It is to be noted that dual connectivity in 3GPP Release-12 specifications works under the principle that UE is configured with cells from one Master Cell Group (MCG) (i.e MCG handled by one MeNB) and one Secondary Cell Group (SCG)(i.e SCG handled by one SeNB). For tight interworking of IMT-Advanced system and next generation system, there may be a need to extend the dual connectivity framework beyond two nodes, because the next generation RAT operating at very high frequencies (eg mmWave/cmWave) would have overlapping coverage due to very dense deployment of nodes serving those frequencies. However, for the sake of simplicity and understanding the disclosed method in the present disclosure assume one MCG handled by IMT-Advanced RAT and one SCG handled by new generation RAT.

Figure 1 depicts the RAN level network architecture (100) consisting of plurality of MeNB (101) serving plurality of cell(s) of the IMT-Advanced air-interface (104a, 104b so on and so forth). One MeNB (101) can be connected to 1..r nodes of next generation RAT i.e SeNB (103) for handling the high frequency carrier(s) in the MeNB coverage area. One SeNB (103) can be connected to 1..s MeNB's. Backhaul transport between MeNB (101) and SeNB (103) may be ideal or non-ideal depending on field deployments of network operators. However, the procedures between MeNB (101) and SeNB (103) are executed assuming a non-ideal backhaul. Within the coverage of MeNB (101) plurality of UE's (102a, 102b, 102c, so on and so forth) which support either only IMT-Advanced functionalities or both IMT-Advanced and next generation RAT functionalities are served by one or more cell(s) (i.e 104a, 104b, etc) of MeNB (101). Regardless of the UE support type each UE will be served with utmost one carrier as the Primary Cell (PCell) based on IMT-Advanced RAT and other carriers configured as Secondary Cell(s) (SCell) with CA functionality. The group of cells serving the UEs (102a, 102b, 102c, etc) from the MeNB (101) is called Master Cell Group (MCG). Hence, UE can be configured with 1..t serving cells from MeNB (101) and additionally only those UEs which support both RATs can be configured with 1..m serving secondary cell(s) from the SeNB (103). The group of SCell(s) serving the UEs (102a, 102b, 102c, etc) from the SeNB (103) is called Secondary Cell Group (SCG). Given the large bandwidth of SCell carrier from mmWave/cmWave bands there is no immediate need for supporting configurations with multiple SCell(s). This means need for CA within SCG is not identified in initial deployments of next generation system but should not be considered as a limiting case. The case where only one SCell based on next generation RAT belongs to the SCG, it is by default the Primary Secondary Cell (PSCell) of that particular UE. For simplicity this PSCell is just referred as SCell throughout the present disclosure. The term SCell of SCG should not be confused with SCell of MCG.

The next generation wireless cellular system hierarchy would consist of 1..k SeNB (103) nodes such that one SeNB (103) node consist of 1...m SCell(s). Further, one SCell consists of 1..n transmission points (Transmission Points (TPs) i.e 105a, 105b, 105c so on and so forth) such that the backhaul between SeNB (103) node and TPs (105a, 105b, 105c etc) is ideal. The TPs (105a, 105b, 105c etc) of one cell of SeNB (103) will operate to provide 1..p "DL coverage beams". Further, it seems reasonable to assume all TPs belonging to the same cell are "time synchronized" i.e. same radio frame and System Frame Number (SFN) timing. The radio frame duration of IMT-Advanced is 10 ms and the SFN range is 0-1023. The numerology of next generation RAT is assumed such that the IMT-Advanced radio frame is either multiple of radio frame of next generation RAT or radio frame of next generation RAT is exactly 10 ms. Therefore, the SFN range of next generation RAT is either 0-1023 or multiple of IMT-Advanced SFN range. In an embodiment of the present disclosure, the radio frame duration of IMT-Advanced system is same as radio frame duration of next generation RAT or the radio frame duration of IMT-Advanced system is integer multiple of radio frame duration of next generation RAT. The maximum number of DL coverage beams 'p' will typically depend on frequency used; i.e. can be larger in higher frequency bands due to smaller antenna separation at the TPs of SeNB (103). The cell of the next generation wireless system is identified by a "Cell Identifier (cell id)". The UE can obtain the cell id from the Synchronization Signal (SS) transmitted by the SCell of the next generation RAT.

It is assumed the UE (102) which supports both IMT-Advanced RAT and next generation RAT is not aware of TPs (105a, 105b, 105c etc) of the next generation wireless system. The TPs operate together to provide beams to the UE and notion of TP is transparent to the UE. Therefore, there is no "TP Identifier (TP-Id)" provided to the UE over the radio of next generation RAT. UE (102) is aware of cell of SeNB (103) and beams covering the cell i.e. the UE shall detect the Synchronization Signal to identify a cell id and "Beam Identifier (beam-id)". The SCell parameters of the next generation RAT which are cell specific like DL/UL bandwidth, Physical Hybrid-ARQ Indicator CHannel (PHICH) configuration, TDD configuration, PRACH configuration, PDSCH configuration, Physical Uplink Control CHannel (PUCCH) configuration, Sounding Reference Signal (SRS) configuration, UL power control configuration, etc. in general is called the SCG configuration information. The SCG configuration information is provided to the UE (102) in a Radio Resource Control (RRC) container through the MeNB (101) via dedicated RRC signaling from the PCell. The terms PHICH, PRACH, Physical Downlink Shared CHannel (PDSCH), Physical Uplink Control CHannel (PUCCH), SRS for the physical channels of next generation RAT are used for simplicity so that someone with ordinary skills of the IMT-Advanced system can correlate with terms used in IMT-Advanced system.

Further, two types of DL beams are considered: 1) Coverage Beams and 2) Dedicated Beams. The coverage beams provide the coverage for SCell of next generation system with a fixed set of directed coverage beams, also called as "grid of beams". Coverage beams cover a relatively wide area, i.e. they are not very "sharp or directed" and can thus only support relatively low data rates. For example in a SCell there could be less than 10 coverage beams or more than 10 DL coverage beams. As an example each coverage beam could cover 30-60 degree sector angle such that gird of coverage beams cover 100-200m radius circular area. Each coverage beam is identified by a "beam id". The coverage beams transmit the Synchronization Signal (SS) and reference signals for beam signal strength measurements. These reference signals are generically referred as Beam Reference Signal (BRS) and used for Radio Resource Management (RRM) measurements are. Coverage beams are used for transmitting DL common channel signalling e.g. RACH response. Coverage beams carry control channel transmissions like Physical Downlink Control CHannel (PDCCH) and user data Physical Downlink Shared CHannel (PDSCH) can also be transmitted on coverage beams when dedicated beams to the UE have been lost. For demodulation purpose when PDCCH/PDSCH is transmitted on coverage beam then Demodulation Reference Signal (DMRS) is also transmitted. Dedicated transmissions towards UE (PDCCH/PDSCH) may potentially use even more directed and sharp beams (e.g. UE specific pre-coding) on so called "Dedicated Beams". Coverage area of dedicated beams would be much smaller in terms of beam width compared to coverage beams (e.g. 1/2, 1/4 or 1/8th of coverage beam area). Dedicated beams are managed based on UE measurement on reference signals called CSI-RS and UE provides CSI feedback at PHY layer. The Channel-State Information - Reference Signal (CSI-RS) reference signal configuration is provided to the UE from the PCell of MeNB (101). To demodulate PDCCH/PDSCH carried on dedicated beams, DMRS is also transmitted on dedicated beam. Since UE just see DMRS kind of reference signals coming from the cell of the next generation system the notion of coverage beam and dedicated beam is transparent to the UE for PDSCH reception point of view. However, notion of coverage beam is known to UE for reception of synchronization signal. Therefore, when SeNB (103) detects UE has lost dedicated beams based on CSI-RS measurement feedback and UE is scheduled data on coverage beam then UE will not be aware that whether the transmission is coming from a coverage beam. To the UE this looks like any other transmission coming from a dedicated beam. Cell edge bitrates on coverage beams will be much lower than cell edge bitrates achievable by dedicated beams. UE transmission in the UL may also be carried on UL beams. However, the number of UL beams is expected to be less compared to the number of DL beams considering the UE size and number of antenna's at the UE.

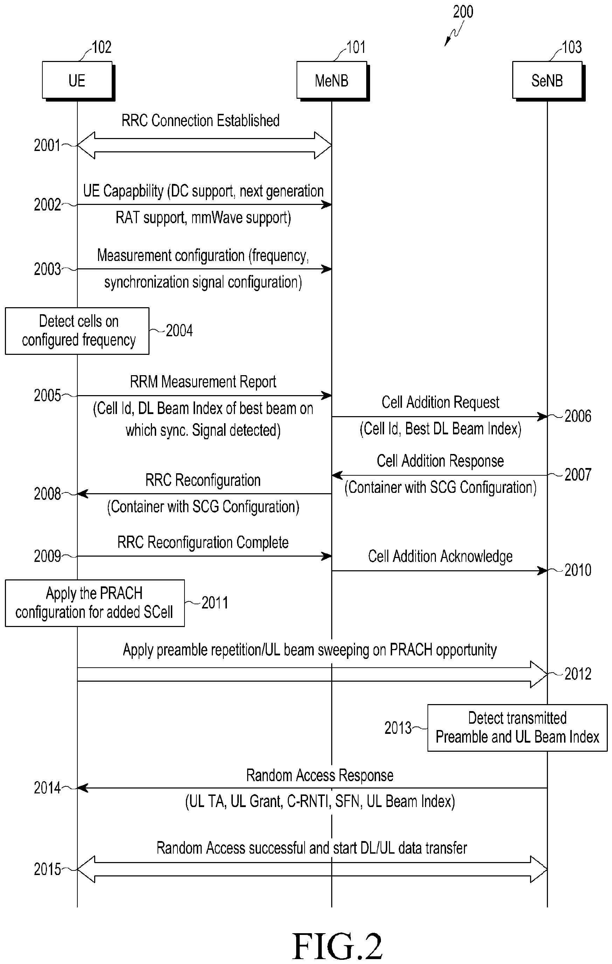

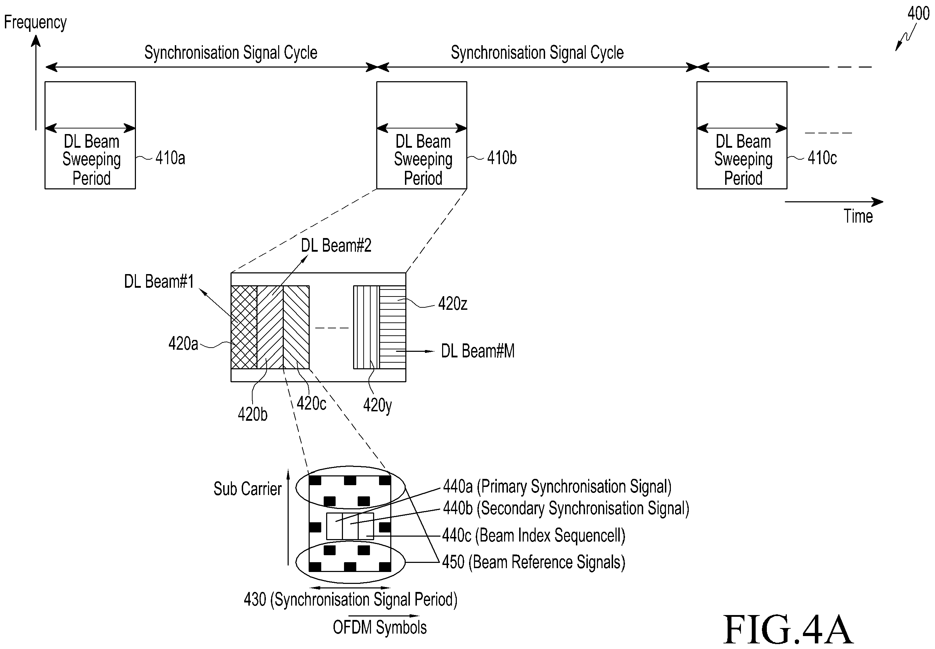

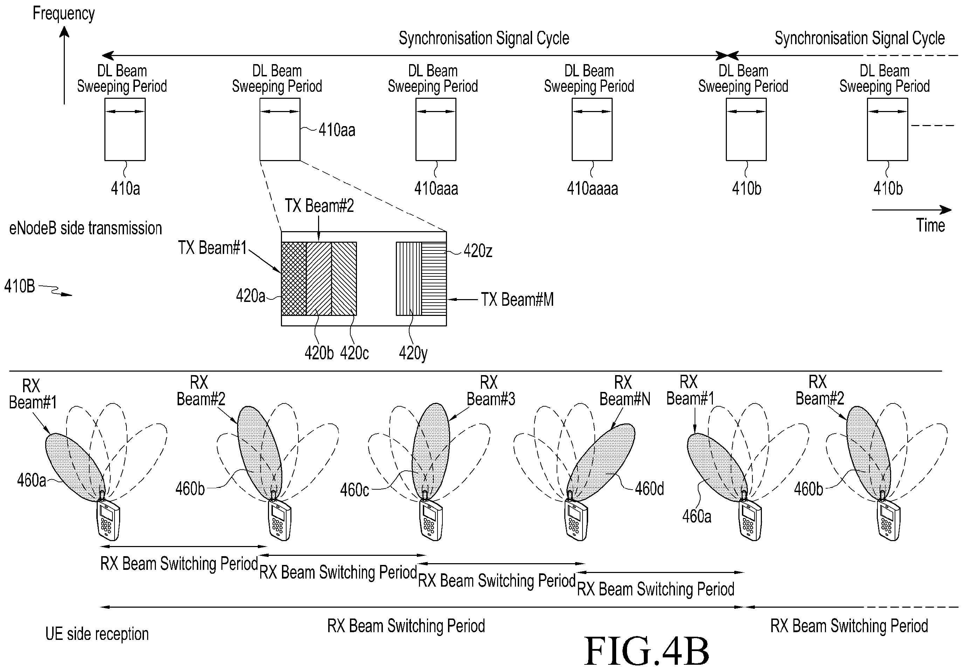

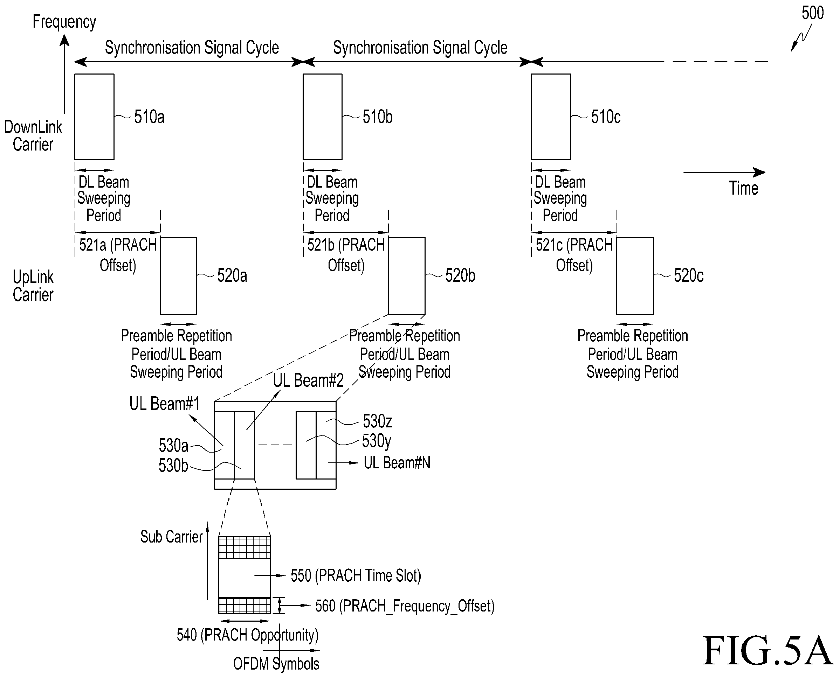

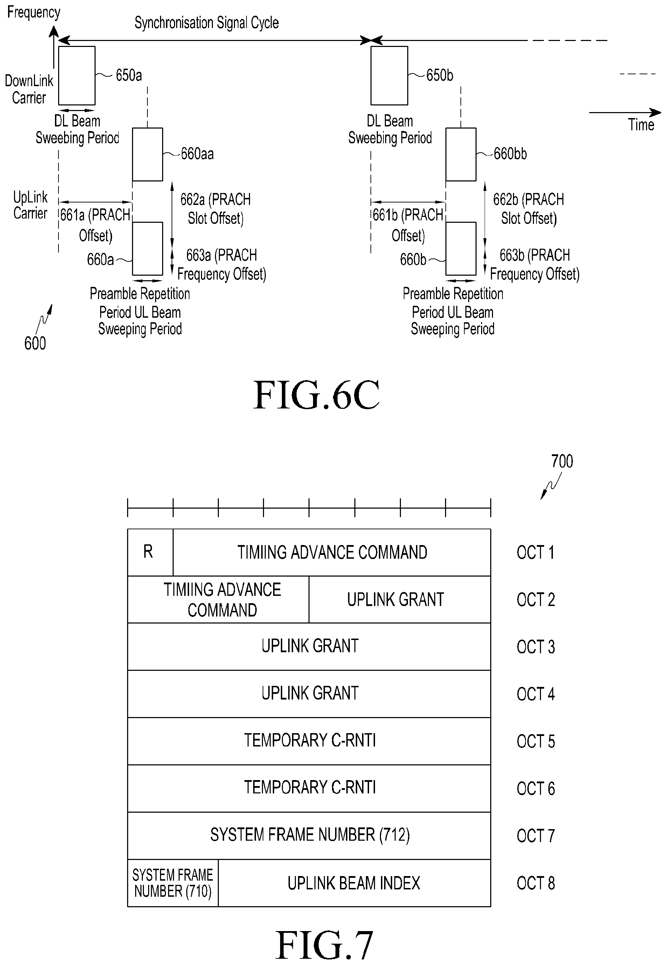

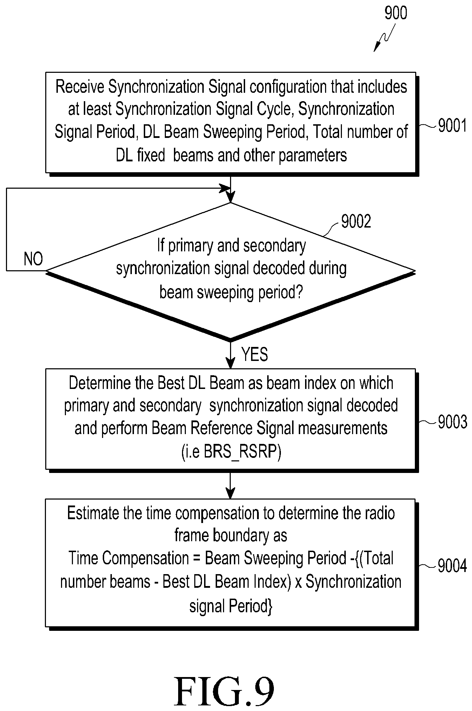

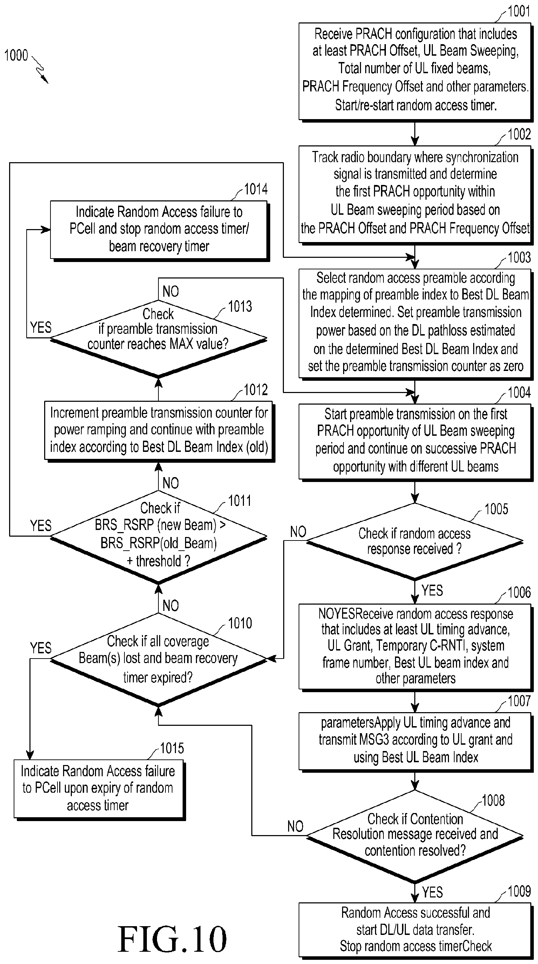

Figure 2 is illustration of a generalized initial access procedure (200) performed by UE (102) on a cell of SeNB (103) based on next generation wireless system when said UE (102) is served by PCell of MeNB (101) based on IMT-Advanced system. At step 2001 UE (102) establishes RRC connection on the PCell of MeNB (101). At step 2002 UE (102) indicates its capability for support of dual connectivity mode of operation and its capability for support of high frequency operation in 10 to 100 GHz (eg. mmWave/cmWave bands). Since it is possible to apply the air-interface for next generation wireless cellular system even below 10 GHz band, the UE capability support of air-interface for next generation wireless cellular system is not strictly limited to mmWave/cmWave bands. In an embodiment of the present disclosure, the UE capability indication for support of next generation RAT can be single capability bits linked to dual connectivity support and higher frequency bands support or separate capability bits of each individual capability i.e separate capability for dual connectivity support, next generation RAT capability support and higher frequency band support, etc. Therefore, the UE capability signaling in 2002 should not be interpreted as limiting case. Based on the UE capability and the data throughput requirement of the UE (102) the MeNB (101) decides to provide measurement configuration 2003 for frequency band that UE (102) supports so that UE can find cells of SeNB (103) making transmission with air-interface of next generation RAT. The measurement configuration 2003 includes at least measurement object corresponding to the frequency, the synchronization signal configuration for that frequency, measurement gap configuration, etc. In an embodiment of the present disclosure, the synchronization signal configuration includes at least the synchronization signal period, the length of the DL beam sweeping period, the synchronization signal cycle, the bandwidth of the synchronization signal and the number of DL fixed beams transmitted during the DL beam sweeping period. The details of synchronization signal design is described in Figure 4. At step 2004, UE (102) starts searching for cells on the configured frequency based on the synchronization signal configuration and using the measurement gap configuration provided in step 2003. It is assumed the DL beam sweeping period would overlap with measurement gap period of 6 ms provisioned in IMT-Advanced system. Upon decoding synchronization signal UE is able to detect the Physical Cell Identity (PCI) or Cell Identifier (cell id) and the corresponding DL coverage beam index for one or more cells on configured frequency. On decoding the Primary Synchronization Signal (PSS) and Secondary Synchronization Signal (SSS) UE comes to know the PCI of the cell and on decoding the beam index sequence UE comes to the Beam Identifier (beam id) or beam index of the DL coverage beam. Based on the cell id (PCI) and beam id (beam index), UE (102) comes to know the resource elements (time-frequency resources) where BRS are transmitted from the detected cell. In an embodiment of the present disclosure, the BRS resources are determined based on at least the PCI and beam index determined for the detected cell. Since these reference signals are beam formed along with synchronization signal they are generically termed as BRS. After the synchronization signal is decoded; UE (102) also decodes coverage beam sequence to determine the DL beam index which becomes the initial DL best or strongest beam for BRS measurements and applying timing compensation for determining radio frame boundary of detected cell. The detailed procedure to estimate the timing compensation to be applied for determining the radio frame boundary is illustrated in Figure 9. In step 2005 UE reports RRM measurements for plurality of detected cells on said configured frequency on which UE receives radio signals according to the air-interface of next generation RAT. The measurement report in 2005 includes at least the BRS measurements (i.e BRS_RSRP/BRS_RSRQ) for plurality of detected cells identified by the cell id and the corresponding DL beam index of that cell where the BRS measurement is largest indicating the best DL beam index to receive further DL messages/data from SeNB (103). At step 2006 MeNB (101) initiates the cell addition request message towards SeNB (103) to add at least one cell reported by the UE (102) in measurement report. The cell addition request message in 2006 includes at least the cell id, best DL beam index corresponding to that cell, BRS_RSRP/BRS_RSRQ measurements for that cell etc. In an embodiment of the present disclosure, the cell addition request message includes at least the cell id, best DL beam index corresponding to that cell, BRS_RSRP/BRS_RSRQ measurements for that cell. If the SeNB (103) decides to accept the request then in step 2007 it sends the SCG configuration in the cell addition response message. The SCG configuration is a RRC container which includes cell id, cell specific parameters like DL/UL bandwidth, PHICH configuration, PRACH configuration, PDSCH configuration, PUCCH configuration, SRS configuration, UL power control configuration, DL beam mobility measurement configuration (i.e CSI- RS reference signal configuration, TDD configuration (if added cell is TDD), MAC configuration, RLC configuration, PDCP configuration etc. In an embodiment of the present disclosure, the beam mobility measurement configuration includes the CSI-RS configuration including the CSI-RS processes that points to the CSI-RS resource configuration including the Non-Zero Power (NZP), Zero Power (ZP) and Interference Measurement Resource (IMR) resources and the reporting configuration. Based on the CSI-RS configuration the UE should monitor the NZP and IMR resources to perform CSI measurements that includes at least Channel Quality Indicator (CQI), Rank Indicator (RI), Precoding Matrix Index (PMI), CSI-RS RSRP measurements on the resources configured for the UE. The RRC container consisting the SCG configuration may be either transparent to the MeNB (101) or the MeNB (101) may understand the contents of the SCG configuration. At step 2008, the MeNB (101) sends RRC reconfiguration message including the SCG configuration towards the UE (102) through the PCell. In step 2009 if the UE (102) comprehends with the SCG configuration then it sends the RRC reconfiguration message to the MeNB (101). Upon receiving the RRC reconfiguration complete the MeNB (101) sends the cell addition acknowledge message in step 2010 to the SeNB (103) to indicate the UE (102) has comprehended with provided SCG configuration. However, a reception of cell addition acknowledge message does not mean the UE has established connectivity with added SCell of SeNB (103). Based on the received SCG configuration UE (102) knows which SCell of SeNB (103) is added based on cell id. Since UE (102) is DL synchronized with added SCell of SeNB (103) it knows the frame boundary but it is not aware of the SFN of the added SCell. For initiating the contention based random access (RA) procedure to establish connectivity with the added SCell of SeNB (103), the UE (102) only needs to know the PRACH configuration. If the PRACH configuration is independent of the SFN then there is no need for the UE (102) to know the SFN for initiating (RA) on the added SCell of SeNB (103). One example of such PRACH configuration which is independent of SFN is illustrated in Figure 5a where every instance of the PRACH opportunity is associated with DL beam sweeping period. Based on the PRACH Offset signaled in PRACH configuration UE (102) applies the PRACH configuration at step 2011 with respect to start of DL beam sweeping period. In an embodiment of the present disclosure, the PRACH configuration also includes the PRACH time slot, the PRACH bandwidth, the PRACH Frequency Offset with respect to lowest indexed resource block of UL bandwidth, the preamble repetition period or UL beam sweeping period, the number of UL fixed beam and other information like the periodicity of PRACH opportunity, power ramping step-size, timers used during random access procedure. Based on the determined best DL beam index UE selects the random access preamble. In an embodiment of the present disclosure, there is one- to-one mapping between the set of random access preambles and the set of DL coverage beams. This one-to-one mapping is either fixed in the standard specification or alternatively provided to the UE as part of the SCG configuration. At step 2012, UE (102) transmits the selected random preamble on the first PRACH opportunity within the preamble repetition period or UL beam sweeping period. In an embodiment of the present disclosure, the preamble transmission power is set according to the estimate of the DL pathloss calculated from the received power measurement eg. BRS RSRP on best DL beam determined. In an embodiment of the present disclosure, the selected preamble is simply repeatedly transmitted or transmitted on different UL beams corresponding to that PRACH time slot with the same transmission power covering the preamble repetition period or the UL beam sweeping period. The detailed contention based random access procedure is illustrated in Figure 10 describing the UE actions for preamble transmission power ramping, change of best DL beam index during random access and loss of DL coverage beam. At step 2013, the SeNB (103) detects the transmitted preamble by the UE (102) during the preamble repetition period or UL beam sweeping period. In an embodiment of the present disclosure, the SeNB determines the UL beam index based on the PRACH time slot in which the preamble was decoded if UL beam sweeping is applied. Since the one-to-one mapping between the set of random access preambles and the set of DL coverage beams is known to the SeNB (103), the best DL beam index is determined for the transmission of Random Access Response (RAR) message. At step 2014, the SeNB (103) transmits on the SCell served by the frequency (eg. frequency from mmWave/cmWave band) the RAR message addressed by the Random Access - Radio Network Temporary Identifier (RA-RNTI) in the beam specific search space to UE (102) on the DL coverage beam identified as best DL beam index in step 2013. For the reception of RAR message since the UE (102) determined the best (strongest) DL beam index it would monitor the beam specific search space. In an embodiment of the present disclosure, the RAR message includes at least UL timing advance, UL grant for UE to send random access message (i.e MSG 3) including BSR, temporary C-RNTI to be used by UE to be included in MSG 3, SFN of the SCell, best UL beam index determined so that UE sends MSG 3 using that UL beam and other information. In an embodiment of the present disclosure, the RAR message is addressed by the RA-RNTI in the beam specific search space on the DL coverage beam identified as best DL beam index. One example of the bit level details of RAR message is illustrated in Figure 7. At step 2015, UE (102) completes the contention based random access procedure by sending MSG 3 on grant allocated in RAR and receives contention resolution message to decide if random access is successful. If the best DL beam index as determined by the UE changes after the reception of RAR message then the UE may include the new best DL beam index in MSG 3. Else the same best DL beam index is included in MSG 3 as indicated during the transmission of preamble. In an embodiment of the present disclosure, the MSG 3 includes best DL beam index determined by the UE after the reception of RAR message. If contention is resolved then at step 2015, the connectivity between UE (102) and SCell of SeNB (103) is established for DL/UL data transfer. Since UE (102) is now aware of the SFN of SCell of SeNB (103) it applies the parts of the SCG configuration (eg. DRX configuration) having dependency on SFN. In another embodiment of the present disclosure, if the SFN is not included in the RAR message then the SFN is transmitted in a MAC CE in a PDSCH on the best DL coverage beam by the SeNB as soon as the random access is completed. UE (102) applies the beam mobility related configuration and starts performing the CSI measurements like CQI, RI, PMI, CSI-RS RSRP measurements. Based on the CSI measurement feedback from the UE (102) the SeNB (103) decides the transmission mode and whether coverage beam or dedicated beam is used for scheduling DL data. The various steps mentioned in Figure 2 illustrates the generalized initial access on the SCell of next generation RAT configured as SCG to the UE; therefore either some of the steps can be combined, sequence of some steps can be modified or some steps can be omitted without deviating from the spirit of the illustrated procedure.

In current IMT-Advanced deployments depending on the scenario like eICIC/FeICIC deployments or TDD deployments, frame synchronization is assumed between cells operating on same frequency. In such cases since the frame boundaries of the different nodes in the network are aligned through proprietary mechanism either based on GPS or IEEE 1588v2 (Precision Time Protocol) or over the air synchronization based on Radio Interface Based Signals (RIBS). In such networks if the SFN is not aligned then usually the SFN Offset between the nodes can be configured through OAM configuration. Therefore, the SFN timing difference accuracy can be safely assumed to be valid over a long period of time even in the presence of time drift or frequency error which is considered negligible because these issues are handled by the network based synchronization mechanism (GPS provides nano second accuracy, IEEE 1588v2 provides sub micro second accuracy and RIBS provides accuracy on few micro second order). Local eNB clock accuracy requirements are specified for networks based on WCDMA TDD, LTE TDD, WiMAX TDD, CDMA 2000 FDD, TD-SCDMA, MBSFN over LTE TDD/FDD, CoMP over LTE TDD/FDD where the synchronization accuracy requirements is in order of less than 5 micro seconds. Such tight accuracy requirement in synchronous network on the order micro seconds can be realized with either GPS or IEEE 1588v2 or RIBS based mechanism. It is understood that GPS based mechanism cannot be used for indoor deployments where either the IEEE 1588v2 or RIBS may be used. In the context of next generation wireless cellular system deployment in non-standalone mode, it can be assumed the MeNB (101) and SeNB (103) can be part of such synchronous network. Further it is general understanding existing synchronization solutions such as IEEE 1588v2 with full backhaul support and GPS may be used to support macro and outdoor deployments for features like TDD, CoMP etc. However, such solutions may not be easy to deploy in a small cell environment due to various factors such as physical location of the small cell and quality and/or availability of the backhaul in the small cell location. Additional synchronization solutions such as local deployment of a synchronization server, hybrid synchronization solutions, or over the air synchronization (RIBS) techniques may need to be considered for next generation RAT deployments. On the contrary, there would be arguments like the next generation RAT will have small coverage and would be densely deployed (few tens of TPs within the MeNB (101) coverage area) then operator would prefer to have asynchronous operation to simply network planning and operations. In current IMT-Advanced systems based on FDD the different cells in the network operate in asynchronous manner. However, for dual connectivity mode of operation specified in 3GPP Release-12, even though the MeNB and SeNB frame boundaries are asynchronous, it is assumed the SFN/subframe Offset between the MeNB and SeNB can be configured through OAM. The rationale for such assumption in asynchronous network is the SFN timing difference accuracy can be assumed to be valid over a long period of time even in the presence of time drift or frequency error. The time drift or frequency error between the local clock oscillator of the MeNB and SeNB can be made negligible if the clock oscillator is locally synchronized with the same time reference source such as GPS or the SeNB synchronizes with the MeNB based on RIBS, where SeNB listens to MeNB DL synchronization/reference signals. In the context of next generation RAT deployments relying on GPS timing source cannot be always assumed due to indoor deployments so either IEEE 1588v2 or RIBS based mechanism can be assumed. In scenarios where neither the GPS nor IEEEv2 or RIBS based mechanism can be assumed then exchange of SFN timing information on the X2 interface between MeNB and SeNB can be standardized to determine the SFN Offset. Based on the above discussion, it can be concluded that for non-standalone operation SFN Offset of the SCell of SeNB (103) with respect to PCell of MeNB (101) can be signalled to the UE (102) by the PCell of MeNB (101). Therefore, there is no need to transmit the Physical Broadcast CHannel (PBCH) and hence the Master Information Block (MIB) which includes the SFN from the SCell of SeNB (103) at least for the non-standalone operation. In the present disclosure the delivery of SFN of SCell of SeNB (103) through PCell of MeNB (101) is proposed which seems feasible if it is assumed the SFN of cell of next generation RAT has the same definition of SFN of cell belonging to LTE-Advanced. LTE SFN is defined on a radio frame basis (i.e it changes every 10 ms) and has a range from 0 to 1023. Keeping the SFN definition same as LTE SFN then following assumptions need to be satisfied:

> 1. LTE SFN is a multiple of Transmission Time Interval (TTI) of the next generation RAT
> 2. UE (102) needs to determine frame boundary of SCell of SeNB (103) based on some synchronization signal transmitted by the SCell.
> 3. PCell of MeNB (101) is aware of the radio frame timing and/or SFN numbering of SCell of SeNB (103) with certain accuracy [eg. +/- 1 ms].

In an embodiment of the present disclosure, the LTE SFN is a integer multiple of the Transmission Time Interval (TTI) of the next generation RAT.

If the above assumptions hold valid then the SFN Offset between the PCell of MeNB (101) and SCell of SeNB (103) can be signalled to the UE (102) by the PCell of MeNB (101) either through RRC signalling or MAC CE. The SFN signaling disclosed in the present disclosure is valid for the assumption that either Frame/SFN synchronization exist between PCell of MeNB (101) and concerned SCell of SeNB (103) or the PCell of MeNB (101) and concerned SCell of SeNB (103) operates completely in asynchronous manner. For standalone operation of next generation RAT it would be necessary to transmit the PBCH and hence the MIB which includes DL bandwidth, PHICH configuration, SFN etc. In an embodiment of the present disclosure, the PBCH can be repeatedly transmitted in the synchronization signal period during the DL beam sweeping period every synchronization signal cycle.

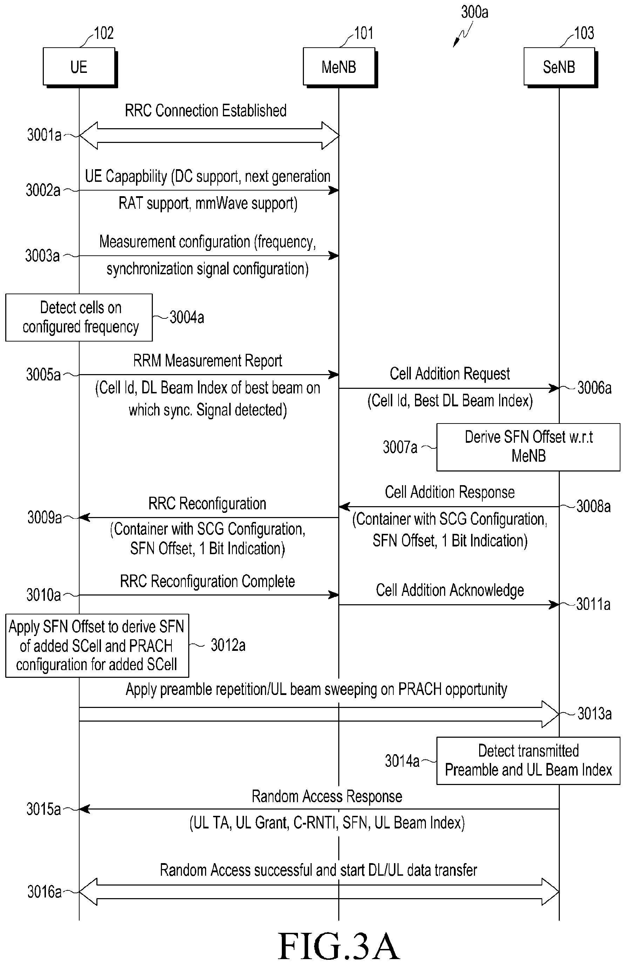

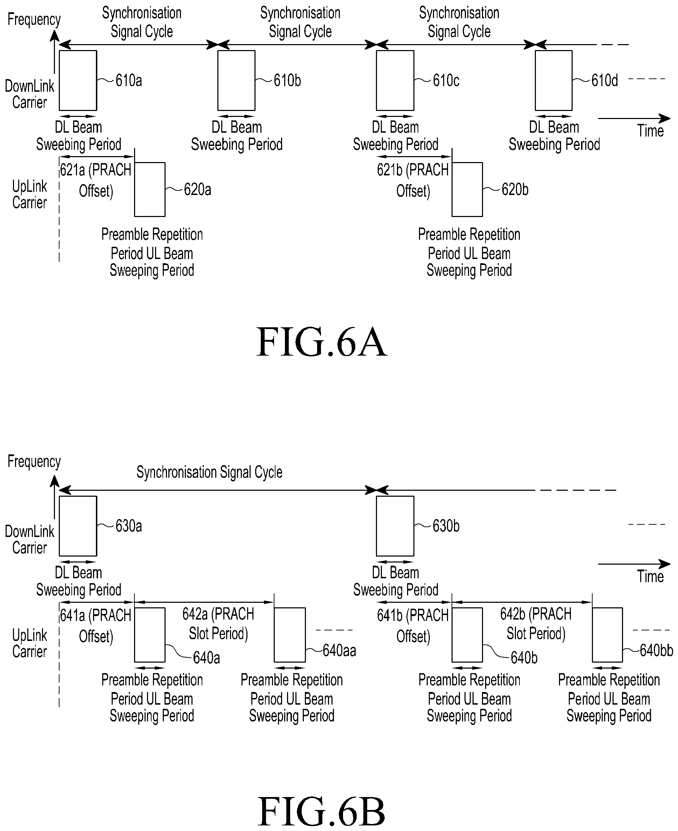

Figure 3a is illustration of another example of generalized initial access procedure (300a) performed by UE (102) on SCell of SeNB (103) based on next generation wireless system. This procedure in 300a is similar to procedure illustrated in 200 with slight modifications related to the SFN information provisioning to the UE (102). For the sake of simplicity and clarity only the steps in 300a which deviate from steps in 200 is described in the following. One big difference in procedure 300a compared to procedure 200 is that UE (102) knows the SFN of the SCell of SeNB (103) before initiating the random access procedure. Such a requirement on the UE side to know the SFN of the added SCell before the RA would arise if the PRACH opportunities available during the preamble repetition period or UL beam sweeping period are not occurring for every instance of synchronization signal transmission. Such an example of PRACH configuration is depicted in Figure 6a where the PRACH opportunity occur every nth instance of synchronization signal opportunity. In such PRACH configuration the occurrence of the PRACH opportunity will be linked with the SFN. The two alternatives to provision the UE (102) with SFN of added SCell of SeNB (103) are i) providing the SFN in the RAR message from the SeNB (103) as shown in step 2014 of procedure 200 or ii) providing the SFN Offset in the RRC Reconfiguration message from the MeNB (101) as shown in step 3009a of procedure 300a. These alternatives will be needed if the SFN information is not periodically broadcasted from the SeNB (103) in PBCH. In an embodiment of the present disclosure, the SFN Offset of the added SCell of SeNB with respect to the SFN of PCell of MeNB is signaled to the UE in a RRC message from the PCell of that UE. The periodic broadcasting of SFN may not be needed for initial deployment of next generation wireless system because the system would operate in non-standalone mode such that the UE configured with dual connectivity mode of operation supporting the next generation RAT is provisioned with SFN information with either of the two alternatives mentioned above. Steps 3001a to 3006a in procedure 300a are same as steps 2001 to 2006 in procedure 200. In step 3007a, the SeNB (103) derives the SFN Offset between the PCell of MeNB (101) and the SCell decided to be added by SeNB (103). The derivation of the SFN Offset may be based on GPS or IEEE 1588v2 (Precision Time Protocol) or over the air synchronization based on Radio Interface Based Signals (RIBS). In procedure 300a since the SeNB (103) derives the SFN offset; the derived Offset is signaled to UE (102) in steps 3008a and 3009a via the MeNB (101). In an embodiment of the present disclosure, the signaled SFN Offset can be specified in radio frame granularity or combination of radio frame granularity and subframe (of PCell) level granularity or even OFDM symbol (of PCell) level granularity. The granularity of the SFN Offset depends on the method used by the SeNB (103). In case of asynchronous operation between MeNB (101) and SeNB (103) there would also be need to signal 1 bit information to the UE (102) regarding the applicability of SFN Offset with respect to the PCell. The 1 bit indicator would indicate

> Code Point 0: SFN offset indicates the radio frame number offset at the start of the radio frame in the PCell of MeNB (101), to the ongoing radio frame in SCell of SeNB (103).

Code Point 1: SFN offset indicates the radio frame number offset at the start of the radio frame in the PCell of MeNB (101), to the closest starting radio frame in SCell of SeNB (103).

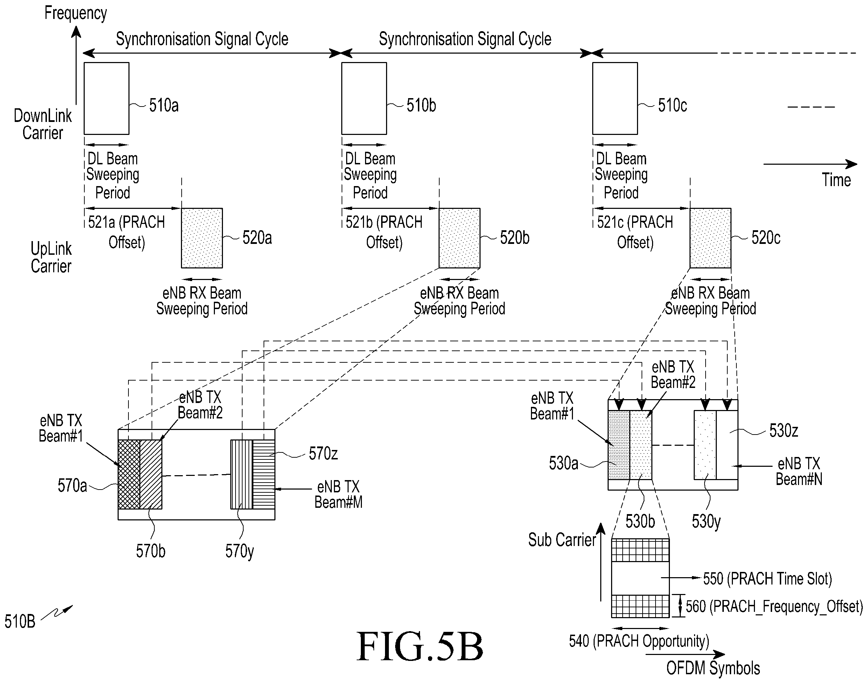

In an embodiment of the present disclosure, the UE is signaled 1 bit indicator along with the SFN Offset to indicate the reference point in time in the SCell that is added with respect to the PCell for the applicability of the SFN Offset. Such indication is necessary so that signaled SFN Offset by MeNB (101) has the same interpretation by the UE (102) on receiving the SFN Offset as intended by the MeNB (101). The RRC container carrying the SCG configuration in steps 3008a and 3009a of procedure 300a is same as RRC container in steps 2007 and 2008 of procedure 200. The steps 3010a and 3011a of procedure 300 are same as steps 2009 and 2010 of procedure 200. Since the UE (102) already knows the frame boundary of added SCell of SeNB (103) and also the frame boundary and SFN of PCell of MeNB (101), in step 3012 the UE (102) applies the received SFN Offset according to the 1 bit indicator to determine the SFN of the added SCell of SeNB (103). Once the UE (102) has determined the SFN of SeNB (103) radio frame, it does not matter in principle that the two frame timings of MeNB (101) and SeNB (103) drift for the asynchronous scenario. The UE should keep track of the SFN of the SeNB (103) radio frames independently from then on i.e. the signaled offset is only intended to be used for initially determining the SFN of SeNB (103) radio frame, and from then on the UE keeps track independently. The UE (102) applies the received PRACH configuration to initiate the random access procedure. The PRACH configuration may have dependency with SFN as shown in Figure 6a in which case the determined SFN is used to know the PRACH opportunity for random access preamble transmissions. The PRACH configuration may be independent of SFN as shown in Figure 5 in which case there is no need to know the SFN to determine the PRACH opportunity for random access preamble transmission. Steps 3013a and 3014a of the random access procedure are same as steps 2012 and 2013 of procedure 200. In step 3015a the SeNB (103) transmits the RAR message on the SCell to the UE (102) on the best DL coverage beam determined in step 3014a. The RAR message to the UE includes all information as shown in Figure 7 except the SFN. At step 3016a, UE (102) completes the contention based random access procedure by sending MSG 3 on grant allocated in RAR and receives contention resolution message to decide if random access is successful. If the best DL beam index as determined by the UE changes after the reception of RAR message then the UE may include the new best DL beam index in MSG 3. If contention is resolved then at step 3016a, the connectivity between UE (102) and SCell of SeNB (103) is established for DL/UL data transfer. The various steps mentioned in Figure 3a illustrates the generalized initial access on the SCell of next generation RAT configured as SCG to the UE; therefore either some of the steps can be combined, sequence of some steps can be modified or some steps can be omitted without deviating from the spirit of the illustrated procedure.

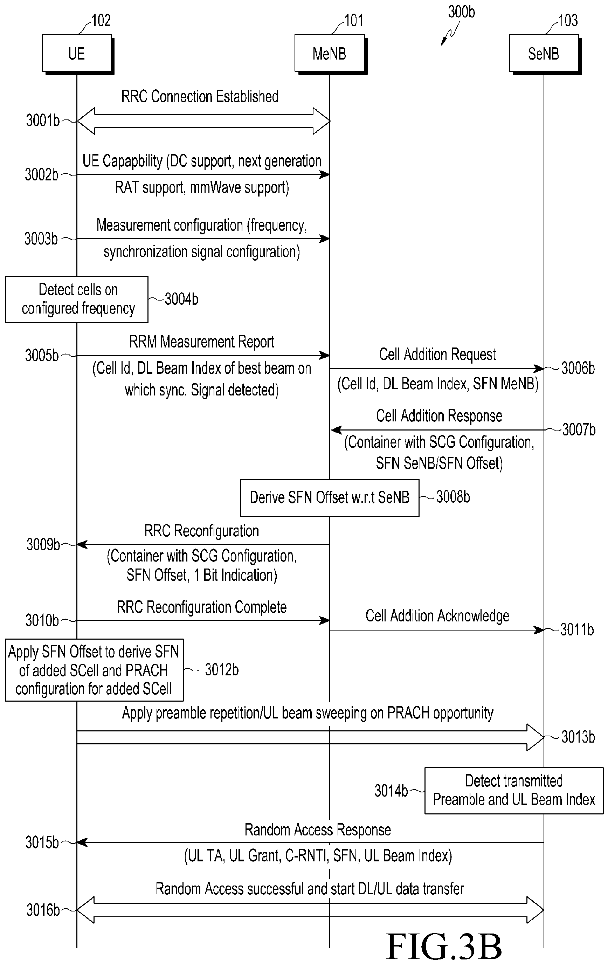

Figure 3b is illustration of yet another example of generalized initial access procedure (300b) performed by UE (102) on SCell of SeNB (103) based on next generation wireless system. This procedure in 300b is similar to procedure illustrated in 300a with slight modifications related to the SFN information exchange between the MeNB (101) and SeNB(103). For the sake of simplicity and clarity only the steps in 300b which deviate from steps in 300a is described in the following.

Steps 3001b to 3005b in procedure 300b are same as steps 3001a to 3005a in procedure 300a. In step 3006b, the MeNB (101) provides the SFN of the PCell of the UE along with time stamp, cell id and best DL beam index in the cell addition request message. The SeNB (103) may derive the SFN Offset between the PCell of MeNB (101) and the SCell decided to be added by SeNB (103). Alternatively, the SeNB (103) provides the SFN of SCell to be added along with time stamp and/or derived SFN Offset in the cell addition response message in Step 3007b. With this X2 based signaling exchange of SFN between MeNB (101) and SeNB (103) then the MeNB would derive the SFN offset at step 3008b. In an embodiment of the present disclosure, the MeNB and SeNB exchange the SFN information along with corresponding time stamp in X2 message on the X2 interface to derive the SFN offset. Rest of steps from 3009b to 3016b of 300b is similar to steps 3009a to 3016a of 300a. The various steps mentioned in Figure 3b illustrates the generalized initial access on the SCell of next generation RAT configured as SCG to the UE; therefore either some of the steps can be combined, sequence of some steps can be modified or some steps can be omitted without deviating from the spirit of the illustrated procedure.

Figure 4a is illustration of one example of transmission of synchronization signal and beam reference signal (400A) from a cell of next generation of wireless system. The DL beam sweeping period (410a, 410b, 410c so on and so forth) carrying the synchronization signal and beam reference signals is transmitted periodically according to the configured synchronization signal cycle regardless of any UE served from the cell. As an example the synchronization signal cycle can be configured as 40/80/160 ms etc. The DL beam sweeping period aligns with the start of the radio frame of the cell transmitting the synchronization signal. During the DL beam sweeping period (410a, 410b, 410c, etc.) plurality of DL coverage beams (420a, 420b, 420c,...,420y, 420z) are transmitted consecutively in time in different directions to provide coverage to UEs in the area covered by sweeping the beams. In the non-standalone mode of operation of the next generation system as depicted in Figure 1, the frequency specific configuration of synchronization signal cycle, the length of DL beam sweeping period, the synchronization signal period, the bandwidth of the synchronization signal and the number of DL fixed beams transmitted during the DL beam sweeping period is provided to the UE (102) from the PCell (i.e MeNB (101)). For standalone mode of operation a default synchronization signal configuration which is frequency agnostic can be specified in 3GPP specifications. For non-standalone mode in order to detect cells on configured frequency the configured measurement gap to the UE is expected to overlap the DL beam sweeping period. As an example if the Transmission Time Interval (TTI) of the next generation RAT is assumed 100 microseconds then during the measurement gap period of 6 ms in IMT-Advanced system the maximum number of DL coverage beams transmitted would be 60. In practical deployments the number of DL beams is expected to be much less than 60 therefore the DL beam sweeping would be completely overlapped by the measurement gap period of 6 ms provisioned in IMT-Advanced system. The synchronization signal period (430) may or may not cover all the OFDM symbols within the TTI of next generation RAT depending on the exact physical layer design. Nevertheless, synchronization signal period (430) consist of plurality of OFDM symbols of next generation RAT and cover the minimum bandwidth consisting of plurality of subcarriers of next generation RAT required for the transmission of synchronization signal and beam reference signals. The synchronization signal consists at least the primary synchronization signal i.e PSS (440a), the secondary synchronization signal i.e SSS (440b) and the beam index sequence (440c). The PSS/SSS (440a/440b) and beam index sequence (440c) are transmitted on plurality of OFDM symbols and plurality of subcarriers such that these signals may be repeatedly transmitted during the synchronization signal period (430) subject to beam forming logic associated with DL beam index#1 (420a). The beam index sequence (440c) indicates the DL beam index#1. In the next synchronization period (430) the PSS/SSS (440a/440b) and beam index sequence (440c) indicating the DL beam index#2 may be repeatedly transmitted on plurality of OFDM symbols and plurality of subcarriers subject to beam forming logic associated with DL beam index#2 (420b). This is referred as DL beam sweeping wherein the PSS/SSS (440a/440b) and beam index sequence (440c) indicating the DL beam index#M may be repeatedly transmitted on plurality of OFDM symbols and plurality of subcarriers in the $m^{th}$ synchronization period (430) subject to beam forming logic associated with DL beam index#M (420z). The beam sweeping of PSS/SSS (440a/440b) and beam index sequence can be performed using a digital beamforming circuitry or analogue beamforming circuitry or an hybrid beamforming circuitry. On decoding the PSS/SSS (440a/440b) and beam index sequence (440c), the UE determines the Physical Cell Identity (PCI) or cell id and the timing compensation to be applied to determine the radio frame boundary of the cell transmitting the synchronization signal. The beam reference signals i.e BRS (450) are reference signals transmitted on plurality of OFDM symbols and plurality of subcarriers excluding the resources occupied by PSS/SSS and beam index sequence. The resources used for transmitting the BRS (450) on DL beam index#m depend on the PCI of the cell and the DL beam index. The BRS (450) is transmitted during the synchronization period (430) subject to the corresponding beam forming logic associated with DL beam index#m. In Figure 4a, it is assumed that UE (102) applies either omni-directional antenna pattern or digital beamforming for the reception of DL beams transmitted by the eNB. If digital receiver beamforming is applied at the UE side then multiple reception beams are generated by the UE simultaneously for the reception of DL beams transmitted by the eNB during the DL beam sweeping period (410a, 410b, 410c, etc.). After decoding the PSS/SSS and beam index sequence; UE come to know the PCI and the DL beam index hence the resources where it can perform measurements at physical layer on BRS. These measurements indicate the estimate of signal strength of beam index#m and reported to higher layer for cell mobility evaluations. Generically these measurements are termed as BRS_Reference Signal Received Power (RSRP) and/or BRS_Reference Signal Received Quality (RSRQ) providing an estimate of signal strength on received beam from the cell detected by the UE. For standalone mode of operation where the UE (102) can camp on the cell of next generation RAT during idle mode, the measurements on BRS i.e BRS_RSRP/BRS_RSRQ are used for idle mode mobility during cell selection and/or cell re-selection. In an embodiment of the present disclosure, the idle mode mobility of UE supporting next generation RAT is based on BRS measurements. In Figure 4a the first beam during the DL beam sweeping period is depicted DL beam index#1 and subsequent beams in time as DL beam index#2 so on and so forth. Such a depiction should not be considered as a limiting case because the starting beam can be any beam uniquely identified by the beam index sequence subject to maintaining the beam sequence and the number of beams same during the DL beam sweeping period. For eg. the starting beam can be DL beam index#11 followed by DL beam index#12 while keeping the number of beams during the DL beam sweeping period equal to M.

Figure 4b is illustration of another example of transmission of synchronization signal and beam reference signal (400A) from a cell of next generation of wireless system assuming analogue reception beamforming is applied at UE side. During the synchronization signal cycle the DL beam sweeping period is periodically repeated multiple times (410a, 410aa, 410aaa so on and so forth). Such periodic repetition of DL beam sweeping period (410a) is performed to facilitate analogue reception beamforming at the UE side. If analogue receiver beamforming is applied at the UE side then only a single reception beam (460a) is generated by the UE for the reception of DL beams transmitted by the eNB during the DL beam sweeping period (410a). UE switches the reception beam from RX Beam#1 to RX Beam#2 (460b) during the next DL beam sweeping period (410aa) for the reception of PSS/SSS. The synchronization signal cycle at the eNB side aligns with the RX beam sweeping period at the UE side. During the RX beam sweeping period UE switches the reception beam from RX Beam#1 (460a) to RX Beam#N (460d) to determine the best DL beam and RX beam pair for reception of transmissions from the eNB. During the RX beam switching period UE applies the generated RX beam#n for the reception of DL beams transmitted by the eNB during the DL beam sweeping period (410a, 410aa, 410aaa, etc.). The RX beam switching period is either fixed in specification or configured to the UE. In non-standalone mode of operation the RX beam switching period configuration is provided to the UE through the PCell (i.e MeNB) through dedicated RRC signaling. For standalone mode of operation the RX beam switching period configuration can be specified in 3GPP specifications or may be provided to the UE through broadcast signaling by the next generation RAT cell directly. If analogue receiver beamforming is applied at the UE side then the next generation RAT eNB needs to know how many RX beams will be formed at the UE side during the synchronization signal cycle or during the UE RX beam sweeping period to decide the number of times the DL beam sweeping period is repeated. In non-standalone mode of operation the UE analogue receiver beamforming capability and number of RX beams can be indicated to the PCell (i.e MeNB) as part of UE capability signaling. However, for standalone mode of operation the next generation network need to assume some maximum number of fixed RX beams (either 4 RX beams or 6 RX beams) generated by all the UE in the system during the UE RX beam sweeping period. If the beam index sequence transmitted with each DL beam during the DL beam sweeping always indicates DL Beam#1 as the first beam and continues sequentially then there is no need for the UE to know the duration of the DL beam sweeping period. However, the UE shall either assume or shall be informed about the synchronization signal period (430). Without knowing the duration of DL beam sweeping period or the number of DL beams, UE can simply try to blindly decode the transmissions from the eNB with the generated RX beam#n during the UE RX beam switching period under the assumption that DL beam sweeping period is smaller than UE RX beam switching period.

Figure 5a is illustration of one example of PRACH configuration (500A) provided to UE for random access on a cell of next generation of wireless system. In non-standalone mode of operation the PRACH configuration of a cell of next generation RAT is provided to the UE through the PCell (i.e MeNB) through dedicated RRC signaling as part of the SCG configuration. For standalone mode of operation a default PRACH configuration which is frequency agnostic can be specified in 3GPP specifications or may be provided to the UE through broadcast signaling by the next generation RAT cell directly. In an embodiment of the present disclosure, the PRACH configuration includes at least the PRACH offset, the length of PRACH time slot, the PRACH bandwidth, the PRACH Frequency Offset with respect to lowest indexed resource block of UL bandwidth, the preamble repetition period or UL beam sweeping period, the number of UL fixed beam, the periodicity of PRACH opportunity, power ramping step-size, timers used during random access procedure. In another embodiment of the present disclosure, UE may be provided with other information like mapping between the set of random access preambles and the set of DL coverage beams, PRACH slot period and PRACH slot offset if multiple PRACH opportunities are configured in time and/or frequency domain respectively. An example of multiple PRACH opportunities configured in time and/or frequency domain is depicted in Figure 6b and 6c. After UE decodes the synchronization signal transmitted during the DL beam sweeping period (510a, 510b, 510c, etc), the UE knows the frame boundary to estimate the DL timing reference. On receiving the PRACH configuration, UE applies the PRACH offset (521a, 521b, 521c, etc) with reference to the estimated DL timing reference to determine the start of the preamble repetition period or UL beam sweeping period (520a, 520b, 520c so on and so forth). During the UL beam sweeping period (520a, 520b, 520c, etc.) the selected random preamble is transmitted on plurality of UL beams (530a, 530b, 530c,...,530y, 530z) consecutively in time in different direction towards the SeNB. Alternatively, the selected preamble is simply repeatedly transmitted during the preamble repetition period (for eg. 520a) on each PRACH opportunity (540). Based on the determined DL best (strongest) coverage beam the random access preamble is selected according to the one-to-one mapping between the set of random access preambles and the set of DL coverage beams. This one-to-one mapping is either fixed in the standard specification or alternatively provided to the UE as part of the PRACH configuration. The length of the PRACH time slot and the bandwidth (550) is signaled in the PRACH configuration. The starting resource block of the PRACH time slot is determined based on the PRACH frequency offset (560) with reference to lowest index resource block.

Figure 5b is illustration of another example of PRACH configuration (500B) provided to UE for random access on a cell of next generation of wireless system. In Figure 5a, during the UL beam sweeping period (520a, 520b, 520c, etc.) the selected random access preamble is transmitted on different UL beams (530a, 530b, 530c, ... , 530y, 530z) consecutively in time in different direction towards the eNB if channel reciprocity is not assumed and digital RX beamforming is assumed at eNB. During the UE RX beam sweeping period or the synchronization signal cycle (refer Figure 4a and Figure 4b) the UE has determined the best DL TX beam-RX beam pair for the reception of transmissions from the eNB. In an alternative method, if channel reciprocity is assumed then UE transmits the selected random access preamble applying the direction of the best UE RX beam determined during the decoding of PSS/SSS and subsequent BRS measurement. In an embodiment of the present disclosure, the random access preamble is transmitted by the UE applying UL TX beamforming by generating UL TX beam according to the direction of the best UE RX beam. There are two options related to the transmission of random access preamble. In the first option, UE simply repeatedly transmits the preamble on the UL beam direction determined by the best UE RX beam during the eNB RX beam sweeping period (520a, 520b, 520c, etc) on each PRACH opportunity (540) if analogue RX beamforming is assumed at the eNB. However this option has two drawbacks: a) UE battery power consumption is increased due to repeatedly transmitting the preamble and b) UL interference is also increased. In the second option, if channel reciprocity is assumed then a further optimization is selecting the PRACH opportunity (540) for preamble transmission corresponding to best DL beam index determined during PSS/SSS decoding. With channel reciprocity it can be assumed eNB would apply the same RX beam index for RACH reception in the selected PRACH opportunity. In both options, each PRACH opportunity (540) for preamble transmission is linked with the timing of DL coverage beam index assuming same number of DL TX beams and RX beams at the eNB. For eg. if UE determined the best DL beam index as DL Beam#2 (570b) then UE transmits the selected random access preamble on the PRACH opportunity (530b) applying UL TX beamforming by generating UL TX beam according to the direction of the best UE RX beam. The eNB applies eNB RX beam#2 corresponding to PRACH opportunity (530b) to decode the RACH preamble. If the preamble is detected by eNB in PRACH opportunity (530b) using RX beam#2 then implicitly eNB determines the best DL beam index for the UE to send RAR is DL beam#2. In this case there no need to have one-to-one mapping between the set of random access preambles and the set of DL coverage beams. The second option is preferable because it leads to less power consumption and less uplink interference. This option can be used under the assumption of channel reciprocity and regardless of digital receiver beamforming or analogue receiver beamforming at eNB. In an embodiment of the present disclosure, if multiple PRACH opportunities are available in time domain then UE selects the PRACH opportunity for preamble transmission linked with the timing of best DL coverage beam determined by the UE. In an embodiment of the present disclosure, if the random access preamble is detected by eNB on PRACH opportunity using a RX beam index from the set of RX beams then implicitly eNB determines the best DL beam index for DL transmission based on the RX beam index using which preamble was detected.

Figure 6a, 6b and 6c are some additional examples of PRACH configuration (600). In Figure 6a, the PRACH configuration is SFN dependent because the PRACH opportunities during the preamble repetition period or UL beam sweeping period (620a, 620b, etc) is linked with every $n^{th}$ DL beam sweeping period (610a, 610c, etc). From UE perspective when the UE receives the PRACH configuration the UE needs to know the SFN of the concerned cell to determine the PRACH opportunity. On determining the SFN of the concerned cell if the following is satisfied [SFN mod (N * Synchronization Cycle)] = 0 where mod is modulo operation and N is a positive integer indicating the periodicity of PRACH opportunity; then PRACH opportunity is available at PRACH Offset. In an embodiment of the present disclosure, the PRACH configuration also includes the value of N which indicates the periodicity of PRACH opportunity. Based on the signaled PRACH offset (621a, 621b, etc.) and PRACH frequency offset (not shown in Figure 6a for simplicity) the UE determines the time and frequency resources for the PRACH opportunity corresponding to the $n^{th}$ DL beam sweeping period.

In Figure 6b plurality of PRACH opportunities (640a, 640aa, etc.) are configured in time domain within the synchronization signal cycle. The first PRACH opportunity (640a) is determined by applying the PRACH offset (641a) with reference to the start of the DL beam sweeping period (630a) corresponding to the start of radio frame and the PRACH frequency offset (not shown in Figure 6b for simplicity) with respect to the lowest indexed resource block of UL bandwidth. The next PRACH opportunity (640aa so on and so forth) is determined by the PRACH slot period (642a) with reference to the start of the previous PRACH opportunity (640a). It seems possible to map the PRACH opportunities in time domain within the synchronization signal cycle to the set of DL beam index. For example if UE determines the DL best (strongest) coverage beam as DL beam index#m then the PRACH opportunity selected by the UE for transmission of the random access preamble is associated with DL beam index#m. In an embodiment of the present disclosure, one-to-one mapping between the set of PRACH opportunity in time domain and set of DL beam index may be provided to the UE as part of the PRACH configuration.

In Figure 6c plurality of PRACH opportunities (660a, 660aa, etc.) are configured in frequency domain within the synchronization signal cycle. The first PRACH opportunity (660a) is determined by applying the PRACH offset (661a) with reference to the start of the DL beam sweeping period (630a) corresponding to the start of radio frame and the PRACH frequency offset (663a) with respect to the lowest indexed resource block of UL bandwidth. The next PRACH opportunity (660aa) in increasing order of resource block index is determined by the PRACH slot offset (662a) with reference to the lowest indexed resource block of the previous lower indexed PRACH opportunity (660a). It seems possible to map the PRACH opportunities in frequency domain within the synchronization signal cycle to the set of DL beam index. For example if UE determines the DL best (strongest) coverage beam as DL beam index#m then the PRACH opportunity selected by the UE for transmission of the random access preamble is associated with DL beam index#m. In an embodiment of the present disclosure, one-to-one mapping between the set of PRACH opportunity in frequency domain and set of DL beam index can be provided to the UE as part of the PRACH configuration.

Figure 7 is an example of contents of random access response message (700) transmitted to a UE from a cell of next generation of wireless system. In an embodiment of the present disclosure, the RAR message includes at least the following field elements: UL timing advance information, UL grant for UE to send random access message (i.e MSG 3) including Buffer Status Report (BSR), temporary C-RNTI to be used by UE to be included in MSG 3, current SFN (710, 712) of the next generation RAT cell, best UL beam index determined by the SeNB so that UE sends MSG 3 using that UL beam and other information. The RAR is octet aligned and length of the field elements shown in Figure 7 are exemplary lengths which can be modified without deviating from the purpose served by each field element. The field 'R' means reserved field. Therefore, the length of the field elements of each field element should not be considered as the limiting case restricted to lengths depicted in Figure 7. For eg. the Cell-Radio Network Temporary Identifier (C-RNTI) field may be 24 bits long instead of 16 bits as shown in Figure 7. With 24 bit C-RNTI it should be possible to address a large density of connected mode UEs compared to 16 bit C-RNTI.

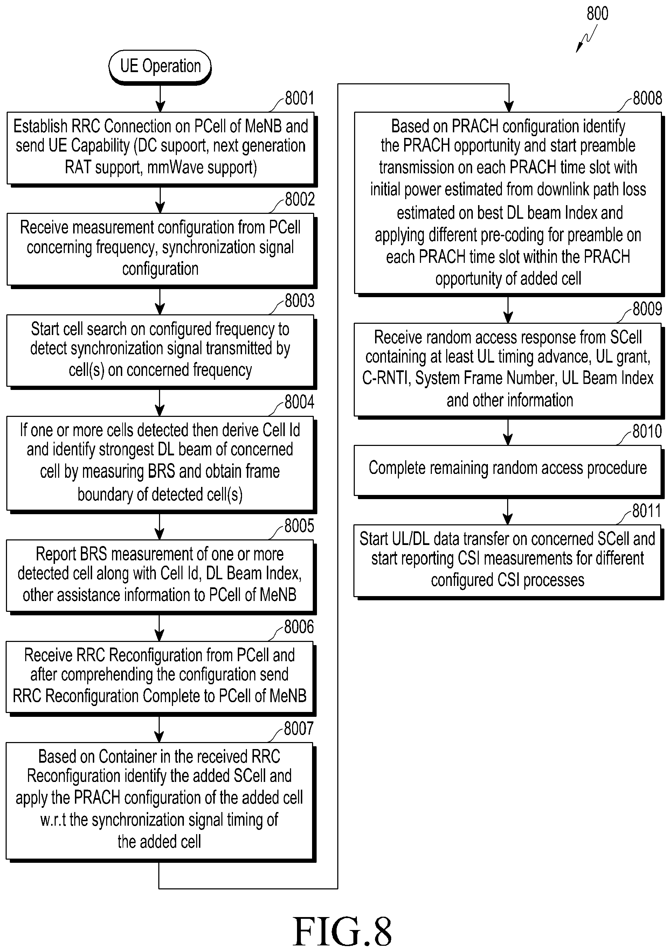

Figure 8 is illustration of UE operation (800) during the initial access procedure on a cell of next generation wireless system. At step 8001 UE establishes RRC connection on the PCell of the MeNB and send UE capability indicating at least support for dual connectivity mode of operation, support for next generation RAT and support for frequency bands belonging to mmWave/cmWave frequency bands. At step 8002 UE receives measurement configuration from PCell of the MeNB containing measurement object(s) concerning one or more frequency on which to search cells of next generation RAT. The measurement configuration also includes the measurement gap configuration and synchronization signal configuration for that frequency. In an embodiment of the present disclosure, the synchronization signal configuration includes at least the synchronization signal period, the length of the DL beam sweeping period, the synchronization signal cycle, the bandwidth of the synchronization signal and the number of DL fixed beams transmitted during the DL beam sweeping period. Based on the received synchronization signal configuration UE starts searching for cells of next generation RAT on concerned frequency. During cell search if one or more cells of next generation RAT are detected then UE determines the cell id of detected cell and determine frame boundary of concerned cell based on the decoded beam index sequence. UE also determines the best (strongest) DL coverage beam of concerned cell by performing BRS measurements in terms of BRS_RSRP/BRS_RSRQ on DL coverage beam on which synchronization signal was detected and where the beam index sequence was decoded. UE performs signal strength measurements i.e. RSRP/RSRQ measurements on BRS of one or more detected cells and determine best DL beam index for concerned cell. At step 8005, UE reports one or more detected cell(s) along with concerned cell id, best DL beam index, BRS measurements and other assistance information to PCell of MeNB. UE receives RRC reconfiguration message from PCell of MeNB which includes the SCG configuration for the SCell of next generation RAT to be added and optionally SFN Offset information along with 1 bit indication on how to apply the SFN Offset. In an embodiment of the present disclosure, the SCG configuration of the concerned added SCell is a RRC container that includes at least cell id, cell specific parameters like DL/UL bandwidth, PHICH configuration, PRACH configuration, PDSCH configuration, PUCCH configuration, SRS configuration, UL power control configuration, DL beam mobility measurement configuration i.e CSI-RS resource configuration including reporting configuration, TDD configuration (if added cell is TDD), MAC configuration, RLC configuration, PDCP configuration etc. The DL beam mobility measurement configuration includes the CSI-RS processes the UE should monitor to perform CSI measurements that includes at least CQI, RI, PMI, CSI-RS RSRP measurements on the CSI-RS resources configured for the UE. After comprehending with the RRC reconfiguration the UE at step 8006 sends the RRC reconfiguration complete to the PCell of MeNB. Based on the received SCG configuration of the added SCell the UE applies the PRACH configuration with reference to the synchronization signal of the concerned SCell at step 8007. In an embodiment of the present disclosure, UE selects the random access preamble corresponding to best DL beam index and estimate the preamble transmission power based on the DL path loss determined from the best DL beam index signal strength. At step 8008, UE transmits the selected random access preamble corresponding to best DL beam index on the PRACH time slot of the concerned SCell of next generation RAT. In an embodiment of the present disclosure, during the preamble repetition period UE repeats the transmission of selected preamble with the same transmission power for plurality of PRACH opportunities. In another embodiment of the present disclosure, UE may apply different pre-coding for repetitive preamble transmission on each PRACH time slot of the UL beam sweeping period. At step 8009, UE starts monitoring the beam search space corresponding to the best DL beam index in order to receive random access response (RAR) from concerned SCell of next generation RAT. On receiving the RA-RNTI in the beam specific common search space the UE decodes the RAR from the concerned SCell which includes at least the UL timing advance, the UL grant, temporary C-RNTI, current system frame number running in the concerned SCell, UL beam index and other information. Based on the UL grant at step 8010 UE transmits MSG 3 on the indicated UL beam index and if the best DL beam index as determined by the UE changes after the reception of RAR message then the UE may include the new best DL beam index in MSG 3. Else the same best DL beam index is included in MSG 3 as indicated during the transmission of preamble. Subsequently, if the contention resolution message is received with the temporary C-RNTI on the best DL index indicated in MSG 3 then random access procedure is successful. In an embodiment of the present disclosure, the MSG 3 includes best DL beam index determined by the UE after the reception of RAR message. At step 8011 UE can start DL/UL transfer of data on the concerned SCell of next generation RAT and start reporting CSI measurements for the different configured CSI processes according to beam mobility configuration.

Figure 9 is flow chart (900) depicting the various steps performed by an user equipment during DL synchronization on a cell of next generation wireless system. At step 9001 the UE receives the measurement configuration which includes the synchronization signal configuration for the configured frequency from the PCell of MeNB. In an embodiment of the present disclosure, the synchronization signal configuration includes at least the synchronization signal period, the length of the DL beam sweeping period, the synchronization signal cycle, the bandwidth of the synchronization signal and the number of DL fixed beams transmitted during the DL beam sweeping period. UE start searching for cells of next generation RAT on concerned frequency based on the received synchronization signal configuration and measurement gap configuration. At step 9002, if the UE detects the PSS signal and/or SSS signal from a cell of next generation RAT then at step 9003 the UE tries to decode the PSS/SSS to determine the cell identity of the detected cell. The UE also tries to decode the DL beam index sequence to determine the DL coverage beam index. The UE starts performing RSRP/RSRQ measurements on the BRS on the determined DL beam index and consider it the strongest DL beam index. If at step 9002 UE could not detect the PSS/SSS then it keep searching for the synchronization signal for the duration of DL beam sweeping period. After the end of DL beam sweeping period the UE resumes search during the next DL beam sweeping period. At step 9004, UE estimates the time compensation to determine the radio frame boundary of the detected cell. Based on the detected best DL beam index the time compensation is estimated as:

$$\text{Time Compensation} = \text{DL Beam sweeping} - \{(\text{Total number of beams} - \text{Best DL beam index}) \times \text{synchronization signal period}\}.$$

Alternately, the time compensation is estimated as:

$$\text{Time Compensation} = \text{DL Beam sweeping} - \{[(\text{Best DL beam index}) \bmod (\text{Total number of beams})] \times \text{synchronization signal period}\};$$

where mod is modulo operation.

With determination of the cell id and the best DL beam index UE determines the BRS resources and then based on the time compensation estimation and BRS the UE determines the frame boundary such that the UE is at least coarsely synchronized in DL with the detected cell.

Figure 10 is a flow chart (1000) depicting the various steps performed by an user equipment during random access procedure on a cell of next generation wireless system. At step 1001, UE receives the PRACH configuration for the detected cell of next generation RAT from the PCell of MeNB. In an embodiment of the present disclosure, the PRACH configuration of the concerned SCell includes at least the PRACH Offset, the duration of PRACH time slot, the PRACH bandwidth, the PRACH Frequency Offset with respect to lowest indexed resource block of UL bandwidth, the preamble repetition period or UL beam sweeping period, the number of UL fixed beam, the periodicity of PRACH opportunity and other information. On reception of the PRACH configuration UE starts/re-starts the random access timer. The random access timer is only used and started for the initial access on the added SCell of SeNB. If UL synchronization is lost with concerned SCell due to expiry of Timing Alignment Timer (TAT) and contention based random access is initiated for UL data resume then random access timer is not used. Since the UE is coarsely DL synchronized with the concerned SCell, it determines the frame boundary associated with the synchronization signal to apply the signaled PRACH Offset at step 1002. After applying the PRACH offset the UE determines the first PRACH opportunity during the preamble repetition period or UL beam sweeping period. The start of the resource block from which the PRACH slot appears in frequency domain is determined based on the PRACH frequency Offset. At step 1003 UE selects the random access preamble corresponding to the best DL beam index determined during the detection of synchronization signal. In an embodiment of the present disclosure, UE set the initial preamble transmission power based on the DL path loss estimated on the determined best DL beam index. At step 1004, by setting the preamble transmission counter as zero the UE starts preamble transmission towards the concerned SCell on the first PRACH opportunity during the preamble repetition period or UL beam sweeping period according to the initial transmission power. In an embodiment of the present disclosure, during the preamble repetition period UE repeats the transmission of selected preamble on the concerned SCell with the same transmission power for plurality of PRACH opportunities. In another embodiment of the present disclosure, UE may apply different pre-coding (i.e different UL beams) for repetitive preamble transmission on each PRACH time slot of the UL beam sweeping period with the same transmission power. At step 1005, UE starts monitoring the beam specific common search space corresponding to the best DL beam index in order to receive random access response (RAR) from concerned SCell of next generation RAT. If at step 1005, UE receives the RA-RNTI in the beam specific common search space then at step 1006 UE decodes the RAR from the concerned SCell which includes at least the UL timing advance, the UL grant, temporary C-RNTI, current system frame number running in the concerned SCell, UL beam index and other information. At step 1005, UE keeps monitoring the beam specific search space for a time window and if the RAR is not received then control moves to step 1010. On receiving RAR at step 1006, UE applies the timing advance and transmits MSG 3 on UL beam index indicated in RAR at step 1007 and starts the contention resolution timer. The MSG 3 includes the temporary C-RNTI, BSR, best DL beam index and other information is transmitted on the UL grant received in RAR. At step 1008, UE starts monitoring the PDCCH of the concerned SCell for the reception of contention resolution message from the SCell of SeNB. If contention resolution message is received at step 1008 and includes the temporary C-RNTI that UE had included in MSG 3 then contention is resolved and random access is considered successful. UE stops the contention resolution timer as well as random access timer. At step 1009, UE can start DL/UL transfer of data on the concerned SCell of next generation RAT and start reporting CSI measurements for the different configured CSI processes according to beam mobility configuration. If contention is not resolved at step 1008 then the UE control moves to step 1010. In an embodiment of the present disclosure, UE checks if it can still detect the synchronization signal and/or BRS on the coverage beams and if UE cannot see any synchronization signal and/or BRS on coverage beam then it considers coverage beams lost and start beam recovery timer. UE keeps searching for the synchronization signal and/or BRS for some time while the beam recovery timer is running. If the beam recovery timer expires or the random access timer expires and UE is not able to see any DL coverage beam then at step 1015 indicates the random access failure to PCell of MeNB. If at step 1010, UE is able to see DL beam then control moves to step 1011 but if it is determined that the best DL beam index has changed such that RSRP of BRS on new beam index is greater than RSRP of BRS of old beam index plus threshold then UE stops the beam recovery timer if running and the UE control moves to step 1003. Else if the earlier determined best DL beam index is not changed at step 1011, then at step 1012 UE increments the preamble transmission counter such that the preamble transmission power is ramped up by s step size compared to initial transmission power. At step 1013, UE checks if the preamble transmission counter has reached max count value. If not then the UE continues with the transmission of preamble corresponding to earlier determined best DL beam index however, with ramped up power on the first PRACH opportunity at step 1004. If the max count value is reached at step 1013 then UE stops random access timer and beam recovery timer if running and indicates the random access failure to PCell of MeNB. In an embodiment of the present disclosure, UE considers BRS measurement on beam i.e BRS RSRP and/or BRS RSRQ of a beam for comparison with BRS measurement of another beam if the measurement is above an indicated absolute threshold. In an embodiment of the present disclosure, the power ramping is linked to the increment of the preamble transmission counter such that when the counter is incremented the preamble transmission is incremented by the ramping step-size compared to the previous determined transmission power. In an embodiment the power ramping step-size is included in the PRACH configuration. In another embodiment of the present disclosure, when the best beam index changes during the random access procedure then the preamble transmission counter is set to zero and the initial transmission power is determined according to the DL path loss estimated on the newly determined best DL beam index. In yet another embodiment of the present disclosure, the ramping of the transmission power is decoupled from the increment of preamble transmission counter but linked to another counter termed the power ramping counter. In this case, if the DL beam index changes then the preamble transmission counter is not reset but the power ramping counter is reset. The preamble transmission counter is compared with the max count value to determine if preamble transmission can be repeated or to declare random access failure on reaching max value.

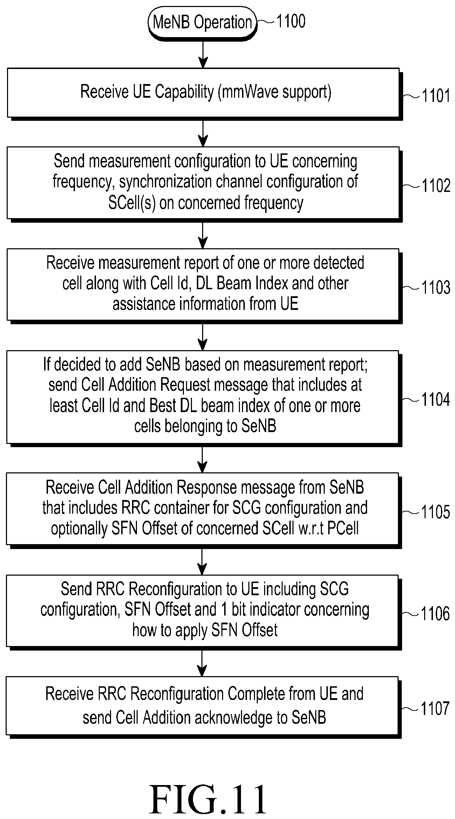

Figure 11 is flow chart (1100) depicting the various steps performed by a Master eNodeB (MeNB) for addition of a cell of next generation of wireless system. At step 1101, the MeNB receives the UE capability on the PCell from a UE which is in RRC connected state. The UE capability received in step 1101 includes at least support for dual connectivity mode of operation, support for next generation RAT and support for frequency bands belonging to mmWave/cmWave frequency bands. Based on the UE capability the MeNB sends measurement configuration on the PCell to the UE at step 1102. In an embodiment of the present disclosure, the measurement configuration includes at least measurement object corresponding one or more frequency on which the MeNB intends the UE to search cells of next generation RAT, the synchronization signal configuration for that frequency, measurement gap configuration, etc. At step 1103, the MeNB receives on the PCell the measurement report from the UE. The measurement report received at step 1103 includes at least the BRS measurements (i.e BRS_RSRP/BRS_RSRQ) for plurality of detected cells identified by the cell id and the corresponding DL beam index of that cell where the BRS measurement is largest indicating the best DL beam index on which the UE expects to receive further DL messages/data from SeNB. At step 1104 if the MeNB decides to add at least one SCell reported by the UE based on the measurement report then MeNB sends cell addition request message on X2 interface to SeNB which handles the concerned SCell. In an embodiment of the present disclosure, the Cell addition request message includes at least the cell id of the SCell intended to be added and the corresponding best DL beam index and optionally the BRS_RSRP/BRS_RSRQ measurements concerning the SCell. At step 1105 the MeNB receives Cell Addition Response message on X2 interface from the SeNB. In an embodiment of the present disclosure, the cell addition response includes RRC container for SCG configuration and optionally SFN Offset of concerned SCell with respect to PCell of MeNB. In an embodiment of the present disclosure, the SFN Offset may be associated with 1 bit signaling which indicates the reference to be applied to the signaled SFN Offset. The SCG configuration received in Cell Addition Response message at step 1105 includes at least the cell id of the SCell of SeNB, cell specific parameters like DL/UL bandwidth, PHICH configuration, PRACH configuration, PDSCH configuration, PUCCH configuration, SRS configuration, UL power control configuration, DL beam mobility measurement configuration, TDD configuration (if added cell is TDD), MAC configuration, RLC configuration, PDCP configuration etc. In an embodiment of the present disclosure, the PRACH configuration also includes the PRACH time slot, the PRACH bandwidth, the PRACH Frequency Offset with respect to lowest indexed resource block of UL bandwidth, the preamble repetition period or UL beam sweeping period, the number of UL fixed beam and other information like the periodicity of PRACH opportunity, power ramping step-size, timers used during random access procedure. In an embodiment of the present disclosure, the beam mobility measurement configuration includes the CSI-RS processes the UE should monitor to perform CSI measurements that includes at least CQI, RI, PMI, CSI-RS RSRP measurements on the CSI-RS resources configured for the UE based on the beam mobility measurement configuration. The RRC container consisting the SCG configuration may be either transparent to the MeNB or the MeNB may understand the contents of the SCG configuration. At step 1106, the MeNB sends RRC Reconfiguration message to UE on the PCell including the SCG configuration, SFN Offset and 1 bit indicator concerning how to apply the SFN Offset received from the SeNB. At step 1107 the MeNB receives the RRC Reconfiguration complete message from the UE on the PCell indicating that the UE has comprehended with the RRC reconfiguration. The MeNB then sends the Cell addition acknowledgement message on X2 interface to the SeNB.

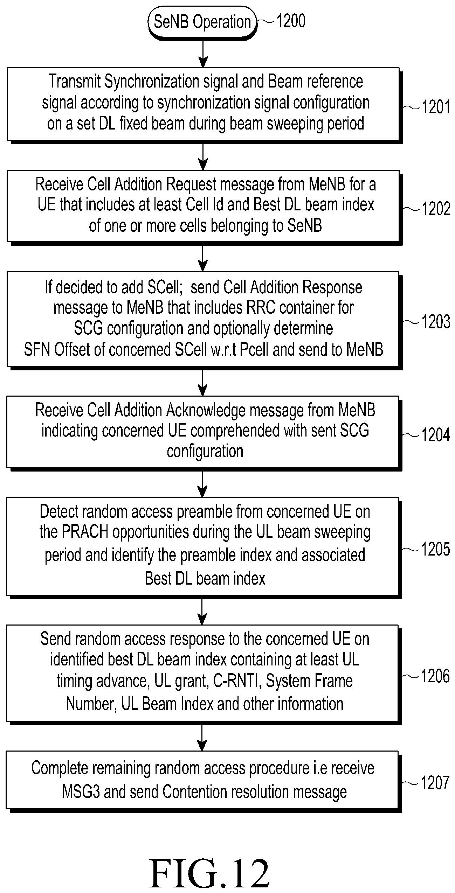

Figure 12 is flow chart (1200) depicting the various steps performed by a Secondary eNodeB (SeNB) for addition of a cell of next generation wireless system. At step 1201 the SeNB transmits Synchronization signal and BRS on the frequency handled by the concerned SCell of the SeNB. The synchronization signal transmission is according to synchronization signal configuration on a set DL fixed beam during beam sweeping period. In an embodiment of the present disclosure, the synchronization signal includes at least the PSS, SSS and the DL beam index sequence. At step 1202 the SeNB (103) receives the cell addition request message on X2 interface from the MeNB (101). In an embodiment of the present disclosure, the Cell addition request message includes at least the cell id of one or more SCell intended to be added and the corresponding best DL beam index and optionally the BRS_RSRP/BRS_RSRQ measurements concerning the plurality of SCell(s). At step 1203 if the SeNB decided to add the SCell included in the cell addition request message then; the SeNB (103) sends Cell Addition Response message on X2 interface to MeNB (101). In an embodiment of the present disclosure, the Cell Addition Response includes RRC container for SCG configuration and optionally SFN Offset of concerned SCell determined by SeNB with respect to PCell of MeNB. In an embodiment of the present disclosure, the SFN Offset may be associated with 1 bit signaling which indicates the reference to be applied for the signaled SFN Offset. In an embodiment of the present disclosure, the SCG configuration sent in Cell Addition Response message includes at least the cell id of the SCell of SeNB, cell specific parameters like DL/UL bandwidth, PHICH configuration, PRACH configuration, PDSCH configuration, PUCCH configuration, SRS configuration, UL power control configuration, DL beam mobility measurement configuration, TDD configuration (if added cell is TDD), MAC configuration, RLC configuration, PDCP configuration etc. In an embodiment of the present disclosure, the PRACH configuration also includes the PRACH time slot, the PRACH bandwidth, the PRACH Frequency Offset with respect to lowest indexed resource block of UL bandwidth, the preamble repetition period or UL beam sweeping period, the number of UL fixed beam and other information like the periodicity of PRACH opportunity, power ramping step-size, timers used during random access procedure. In an embodiment of the present disclosure, the beam mobility measurement configuration includes the CSI-RS processes the UE should monitor to perform CSI measurements that includes at least CQI, RI, PMI, CSI-RS RSRP measurements on the CSI-RS resources configured for the UE based on the beam mobility measurement configuration. At step 1204, the SeNB (103) receives on X2 interface the Cell Addition Acknowledge message from MeNB (101) indicating concerned UE (102) comprehended with sent SCG configuration. At step 1205, the SeNB detects random access preamble on the PRACH opportunities during the preamble repetition period or UL beam sweeping period according to PRACH configuration of concerned SCell. In an embodiment of the present disclosure, if the SeNB decodes the preamble transmitted by UE then it identifies the preamble index and the UL beam index depending on the PRACH time slot in which it decodes the preamble. In an embodiment of the present disclosure, based on the preamble index of the decoded preamble the SeNB also determines the associated Best DL beam index the UE intends to indicate the SeNB for RAR transmission. The SeNB sends the random access response at step 1206 on the concerned SCell addressed by the RA-RNTI on the identified best DL beam index in the beam specific common search space associated with best DL beam index. In an embodiment of the present disclosure, the RAR message contains at least the determined UL timing advance, UL grant, C-RNTI, System Frame Number, UL Beam Index and other information. At step 1207 the SeNB complete remaining part of the random access procedure with the UE which includes reception of MSG 3 on indicated UL beam index and transmission of contention resolution message on determined best DL beam index respectively. In an embodiment of the present disclosure, the MSG 3 includes best DL beam index determined by the UE after the reception of RAR message.

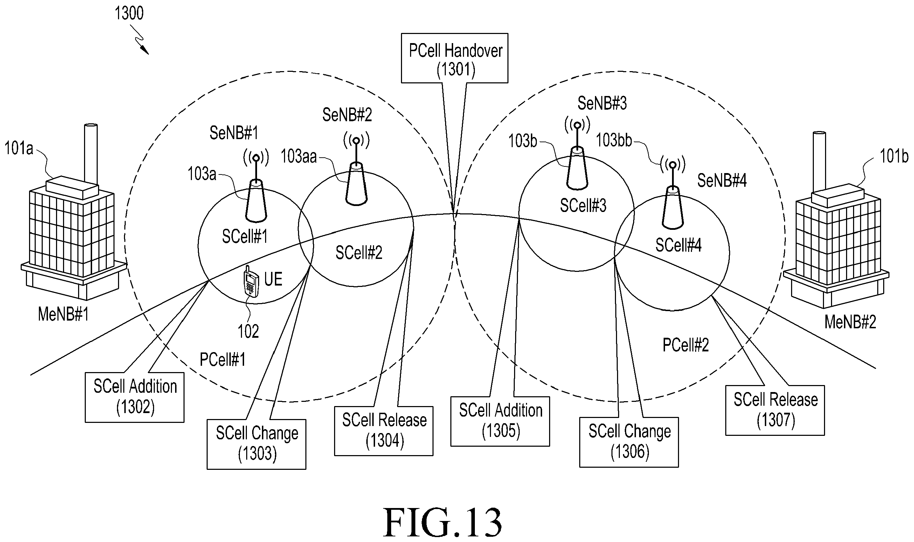

Figure 13 is illustration of two levels of cell mobility scenario (1300) for a User Equipment (102) operating in dual connectivity mode served by MeNB (101) of IMT-Advanced system and SeNB (103) of next generation wireless system. The UE (102) operating in dual connectivity mode is served by PCell#1 from MeNB#1 (101a) of IMT Advanced system and SCell#1 from SeNB#1 (103a) of next generation RAT. The first level of UE mobility involves PCell mobility where the UE is handed over from PCell#1 of MeNB#1 (101a) to PCell#2 of MeNB#2 (101b). The PCell mobility can be understood as coverage layer mobility handled by handover procedures involving triggering of measurement events based on at least Event A1, Event A2, Event A3, Event A4 so on and so forth specified in 3GPP TS 36.331. At point (1301) which is overlapping area of PCell#1 and PCell#2 the measurement event configured for UE (102) is triggered in order to support such coverage layer mobility. Such measurement events are based on RSRP/RSRQ measurements performed by UE (102) on cell-specific reference signals (CRS) transmitted by PCell#1 and PCell#2 respectively. The second level of UE mobility involves SCell mobility where the SCell of next generation RAT is either added as a capacity layer or changed with another SCell or released if the UE is no more in coverage of cell(s) of next generation RAT. In the present disclosure the measurement event configured for UE (102) for handling of SCell mobility of next generation RAT is based on RSRP/RSRQ measurements performed by UE (102) on beam-specific reference signals (BRS) transmitted by SCell#1, SCell#2, SCell#3, SCell#4, etc on the DL coverage beams respectively. In an embodiment of the present disclosure, the UE mobility for SCell(s) of the next generation RAT is based on RSRP/RSRQ measurements performed by UE on beam-specific reference signals (BRS). There is need to define the measurement metric based on BRS and new measurement events which take into account the cell quality of the cells of next generation RAT used for comparing the relative or absolute signal strength. Depending on BRS based measurement reports sent by the UE (102) through RRC signaling to MeNB#1 (101a) on PCell#1 one of the following events are possible: at point (1302) SCell addition procedure is executed to add SCell#1 of SeNB#1 (103a). An example of such SCell addition procedure was described in Figure 2 and Figure 3. At point (1303) SCell change procedure is triggered where the current serving cell of next generation RAT i.e SCell#1 of SeNB#1 (103a) is changed to SCell#2 of SeNB#2 (103aa) based on the BRS measurements of SCell#1 and SCell#2. Such SCell change procedure would look similar to the cell addition procedure described in Figure 2 and Figure 3 except that on receiving RRC reconfiguration message containing the SCG configuration UE (102) would re-establish the user plane protocol stack including at least the MAC, RLC and PDCP entity of the SCG after successful random access on SCell#2 of SeNB#2 (103aa). In such an event the UE (102) re-establish the data radio bearers on SCell#2 to continue DL/UL data transfer on SCell#2 and continue to operate in dual connectivity mode. When the UE (102) is on the cell edge of SCell#2 then at point (1304) the SCell release procedure is triggered based on the BRS measurements for SCell#2. In such an event the UE (102) release the user plane protocol stack including at least the MAC, RLC and PDCP entity of the SCG and release the data radio bearers handled by SCell#2 and continue to operate on the coverage layer of PCell#1 for DL/UL data transfer. Similar SCell mobility events are shown at points (1306), (1307) and (1308) when the UE (102) is served by PCell#2 from MeNB#2 (101b). There is also third level of UE mobility which is called as beam level mobility where the serving DL beam of the UE is switched. Such beam level mobility is directly handled at the physical layer by the concerned SCell of the next generation RAT serving the UE at that point of time. Such beam level mobility is based on the beam level measurement configuration provided to the UE during SCell addition and/or SCell change. In an embodiment of the present disclosure, the beam mobility measurement configuration includes the CSI-RS processes the UE should monitor to perform CSI measurements that includes at least CQI, RI, PMI, CSI-RS RSRP measurements on the CSI-RS resources configured for the UE. These CSI measurements are reported by the UE at physical layer directly to the concerned SCell so that concerned SCell takes beam mobility decisions. However, details of such beam level mobility are not disclosed in the present disclosure.

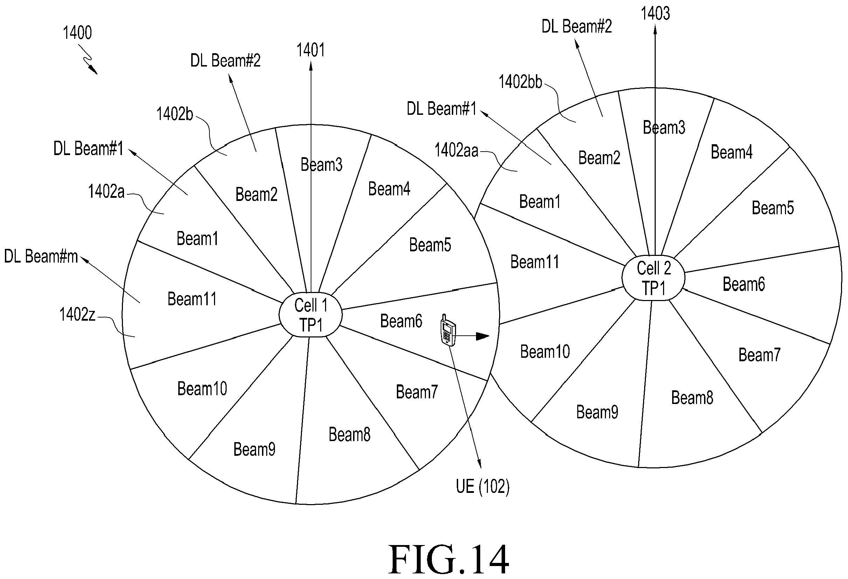

Figure 14 is illustration of second level of cell level mobility scenario (1400) for a User Equipment (102) served by SCell of next generation wireless system. Transmission point#1 (TP1) of cell1 (1401) from SeNB of next generation RAT forms plurality of DL coverage beams DL beam#1 (1402a), DL beam#2 (1402b), ...., DL beam#m (1402z) to serve UE (102). Similarly Cell2 (1403) which is neighboring cell of next generation RAT forms plurality of DL coverage beams DL beam#1 (1402aa), DL beam#2 (1402bb), ...., DL beam#m (1402zz) from TP2 to serve UEs in its coverage area. There may be multiple TPs performing beamforming under the coverage of one cell, however for simplicity a single TP serving a cell is shown in Figure 14. This should not be considered the limiting case because the TPs are transparent to the UE. The MeNB of IMT Advanced system is responsible for configuring cell measurements of next generation RAT on correct frequencies (eg. from mmWave/cmWave frequency band). The UE (102) reports newly detected cells of next generation RAT on configured frequency with RRC message to the MeNB, who decides on SCell mobility (i.e SCell addition/SCell change/SCell release). Note that the UE is not aware whether the newly detected cell belongs to the same SeNB or to a different SeNB i.e. MeNB is expected to have this knowledge. So, the MeNB would either contact the current SeNB or a new SeNB for SCell change kind of SCell mobility decisions. In an embodiment of the present disclosure, the measurement configuration to the UE includes at least the PCell mobility level measurement configuration, the SCell mobility level measurement configuration and the beam mobility level measurement configuration. However, in the present disclosure it is assumed that there is no need to configure specific BRS resources/cell id's for neighbor SCell measurements i.e. UE may only need to be configured with some frequency specific information (e.g. synchronization signal configuration) and the SCell mobility level configuration may have cell blacklist if required. In an embodiment of the present disclosure, the cell blacklist includes those cell ids which the UE is not expected to report BRS measurements. UE (102) is currently served by Cell1 (1401) and it is in the area of DL coverage beam#6. The DL data transmission (PDSCH) from Cell1 (1401) towards UE (102) can occur on dedicated beam or DL coverage beam depending on the CSI measurements reported by the UE at physical layer. UE can make signal strength measurements on the CSI-RS resources configured for Cell1. Such power measurements like CSI-RS_RSRP on the CSI-RS resources of Cell1 give the estimate of beam quality regardless of whether the serving beam is dedicated beam or DL coverage beam. However, UE (102) is not aware of the CSI-RS resources of neighbor cell i.e Cell2 (1403) and therefore cannot make such CSI-RS_RSRP measurements for comparing the beam quality of neighbor cell with serving cell. However, since synchronization signal accompanied with BRS is transmitted periodically by the serving cell i.e Cell1 (1401) as well as neighbor cell i.e Cell2 (1403), UE (102) can make BRS based RSRP/RSRQ measurements on the DL coverage beams from Cell1 (1401) and Cell2 (1403).

If it is assumed UE is currently handled only by DL coverage Beam#6 from Cell1 (1401) and if Cell2 (1403) also intends to handle the UE with the use of only DL coverage beams, then the SCell change measurement trigger should be e.g.:

$$Q(\text{Cell2, DL Beam\#10}) > Q(\text{Cell1, DL Beam\#6}) + \text{Offset}$$

In an embodiment of the present disclosure, the SCell mobility event can be generalized as:

$$Q(\text{Cell\_N, DL Beam\#n}) > Q(\text{Cell\_S, DL Beam\#m}) + \text{Offset}$$

where

Q: represents cell quality in terms of dBm or dB measured on BRS
Cell_N: represents neighbor cell
Cell_S: represents serving cell
DL Beam#n: represents the strongest beam of neighbor cell in terms of RSRP/RSRQ measurement
DL Beam#m: represents the strongest beam of serving cell in terms of RSRP/RSRQ measurement
Offset: represents threshold provided in measurement configuration in dB

In an embodiment of the present disclosure, the SCell mobility event is triggered when strongest beam quality of neighbor cell is greater than strongest beam quality of serving cell by an offset. However, if Cell2 (1403) does intend to use dedicated beams to serve the UE (102), then since the UE (102) is in the coverage between DL Beam#10 and DL Beam#11 from Cell2, the cell quality obtainable in cell2 may exceed the quality of concerned individual DL coverage beams from Cell2. Therefore, in such a case a more suitable SCell change measurement trigger could be e.g.:

$$\text{i.} \quad Q(\text{Cell2, DL Beam\#10}) + Q(\text{Cell2, DL Beam\#11}) > Q(\text{Cell1, DL Beam\#6}) + \text{Offset}$$

In the above equation the linear addition of BRS signal quality from the DL Beam#10 and DL Beam#11 should provide a reasonable indication of the quality that can be achieved with a dedicated beam from Cell#2. This holds true for the case the UE is receiving strong beams from the same TP or from different TP of the serving cell or the neighbour cell. In an embodiment of the present disclosure, the cell quality with linear addition of BRS signal strength can be generalized as follows:

【Math Figure 1】

$$Q_{cell,j} = W_j \cdot 10 \cdot Log(\sum_{i=1}^{N_{A,j}} Q_{beam_{i,j}}) + (1-W_j) \cdot 10 \cdot Log(Q_{BestBeam,j})$$

where

$Q_{cell,j}$: represents the signal strength of jth cell in dBm or dB
$N_{A,j}$: represents the active set of number of coverage beams to consider for the jth cell
$W_j$: represents the weighting factor for the jth cell

$Q_{beami,j}$: represents the BRS measurement in mWatts or Watts on the ith beam of jth cell
$Q_{BestBeam,j}$: represents the BRS measurement in mWatts or Watts on the best beam of jth cell

In an embodiment of the present disclosure, the SCell mobility event is triggered when linear addition of beam quality of the beams in the active set of neighbor cell is greater than the linear addition of beam quality of the beams in the active set of serving cell by an offset.

If more than NAj beams are visible to the UE then the UE selects the highest ranked NAj beams in terms of signal strength. UE determines best NAj coverage beams it can detect for the current serving cell and for any potential neighbour cell candidate. In an embodiment of the present disclosure, the SCell mobility event can be generalized as:

【Math Figure 2】

$$Q_{Cell_N} > Q_{Cell_S} + offset$$

where

$Q_{Cell\_N}$: represents signal quality of neighbor cell in dBm or dB depending on measurement metric
$Q_{Cell\_S}$: represents signal quality of serving cell in dBm or dB depending on measurement metric
Offset: represents threshold provided in measurement configuration in dB

In an embodiment of the present disclosure, the parameters NAj, Wj, Offset are provided through RRC signaling to UE in the measurement configuration from the PCell of MeNB. In an embodiment of the present disclosure, the BRS measurement on a candidate beam of either the serving cell or neighbor cell is considered for linear addition if the measurement is above a minimum configured absolute threshold.

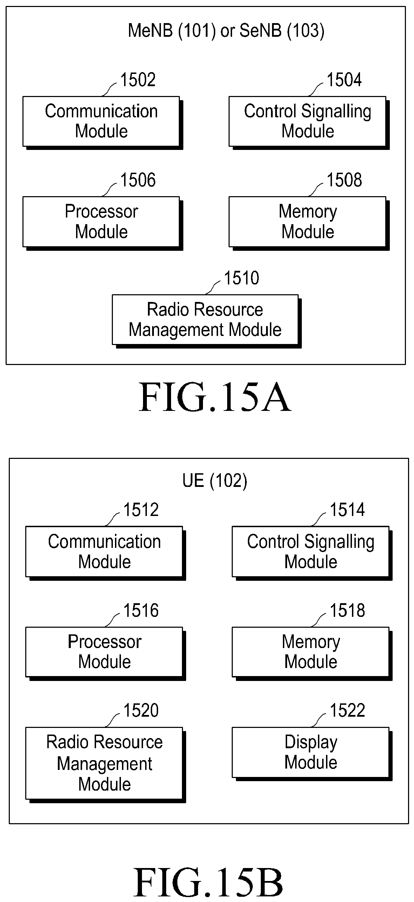

Figure 15a is a block diagram illustrating various modules of a MeNB and/or a SeNB; according to the embodiments of the present disclosure as disclosed herein. The primary blocks present in the MeNB or SeNB for communication with the UE include a communication module 1502, a control signaling module 1504, a processor module 1506, a memory module 1508 and a radio resource management module 1510. In an embodiment of the present disclosure, the communication module 1502 is configured to communicate RRC signaling to and from the UE 102 and X2 signalling to and from SeNB for establishing dual connectivity. For example, the wireless communication module 1502 in a MeNB 101 can be configured to communicate the measurement configuration and RRC reconfiguration messages to one or more UEs 102a, 102b, 102c. In another example, the communication module 1502 in a SeNB 103 can be configured to communicate X2 signalling to the MeNB for establishing dual connectivity such that SeNB 103 can receive and send Cell Addition Request and Cell Addition Response to MeNB 101. Further, the communication module 1502 in the MeNB 101 can be configured to transmit and receive data from one or more UEs 102a, 102b, 102c according to physical layer waveform and coding specified for IMT Advanced system in 3GPP specification. Similarly the communication module 1502 in the SeNB 103 can be configured to transmit and receive data from one or more UEs 102a, 102b, 102c according to physical layer waveform and coding assumed for next generation wireless system.

The control signaling module 1504 in MeNB 101 can be configured to prepare the related RRC messages to be transmitted to the UE and also can be configured to parse the related RRC message received from the UE. Further, the control signaling module 1504 in MeNB 101 can be configured to determine the bearer to be transmitted over within respective cells in the eNB's. The bearer described herein can either be a Data Radio Bearer (DRB) or a Signaling Radio Bearer (SRB). The selection of a bearer is based on several variables, which include for example, but are not limited to, Quality of Service requirements (QoS), traffic characteristics of the bearer, and load and coverage area of the serving cell of eNB. In addition, the control signaling module 1504 in MeNB 101 and SeNB 103 can be configured to prepare the related X2 messages to be exchanged with each other to configure the UE for dual connectivity mode operation.

The processor module 1506 depicts a computing environment implementing the method and system for initial access and mobility handling for UE in a wireless network including the first eNB connected to the second eNB, according to the embodiments of the present disclosure as disclosed herein. The computing environment of 1506 comprises at least one processing unit that is equipped with a control unit and an Arithmetic Logic Unit (ALU), a clock chip, plurality of networking devices, and a plurality Input output (I/O) devices. The processor module 1506 is responsible for processing the instructions of the algorithm. The processing unit receives commands from the control unit in order to perform its processing. Further, any logical and arithmetic operations involved in the execution of the instructions are computed with the help of the ALU. The overall computing environment can be composed of multiple homogeneous or heterogeneous cores, multiple CPUs of different kinds, special media and other accelerators. The processing unit is responsible for processing the instructions of the algorithm. The algorithm comprising of instructions and codes required for the implementation are stored in either the memory module 1508 or the storage or both. At the time of execution, the instructions may be fetched from the corresponding memory module 1508 or storage unit, and executed by the processing unit. The processing unit synchronizes the operations and executes the instructions based on the timing signals generated by the clock chip. The embodiments of the present disclosure disclosed herein can be implemented through at least one software program running on at least one hardware device and performing network management functions to control the elements. The methods shown in the Figures 11 and 12 include various units, blocks, modules, or steps described in relation with methods, processes, algorithms, or systems of the present disclosure, which can be implemented using any general purpose processor and any combination of programming language, application, and embedded processor.

Further, the memory module 1508 is also configured to store information related to operation of the eNB's (MeNB 101 and SeNB 103) and the UE 102. The memory module 1508 can be configured to store various UE related configurations when UE is in connected mode and UE capabilities for one or more UEs 102a, 102b, 102c etc.

The radio resource management module 1510 is responsible for various aspects like PCell mobility, SCell mobility etc. The radio resource management module 1510 in the MeNB 101 may be configured to evaluate the handover decisions and SCell mobility decisions based on the measurement reports sent by one or more UEs. The MeNB 101 receives the measurement reports from one or more UEs 102a, 102b, 102c etc and decides to perform PCell handover and/or add/change/release SCell for that particular UE. Similarly, radio resource management module 1510 in the SeNB 103 can be configured to receive the BRS measurements of one or more SCell it is handling to be added as SCell for one or more UEs 102a, 102b, 102c etc. The SeNB 103 can reject the SCell additional request from the MeNB 101 if the radio resource management module 1510 in the SeNB 103 indicates overload of SeNB resources and additional resources cannot be configured to a particular UE 102.

Figure 15b is a block diagram illustrating various modules of a UE; according to the embodiments of the present disclosure as disclosed herein. The primary blocks present for communication in dual connectivity of UE include a communication module 1512, a control signaling module 1514, a processor module 1516, a memory module 1518, a radio resource management module 1520 and a display module 1522.

In an embodiment of the present disclosure, the communication module 1512 is configured to communicate RRC signaling to and from the MeNB 101 for establishing dual connectivity.

For example, the wireless communication module 1512 in the UE 102 can be configured to communicate the measurement report and RRC reconfiguration complete message to the MeNB 101. In another example, the communication module 1512 in the UE 102 can be configured to receive the synchronization signal from the SeNB 103 can perform random access procedure on the SCell of the SeNB 103. Further, the communication module 1512 in the UE 102 can be configured to transmit and receive data from the MeNB 101 according to physical layer waveform and coding specified for IMT Advanced system in 3GPP specification. Similarly the communication module 1512 in the UE 102 can be configured to transmit and receive data from the SeNB 103 according to physical layer waveform and coding assumed for next generation wireless system.

The control signaling module 1514 in the UE 102 can be configured to prepare the related RRC messages to be transmitted to the MeNB 101 and also can be configured to parse the related RRC message received from the MeNB 101.

The processor module 1516 depicts a computing environment in the UE 102 for implementing a method and system for initial access and mobility handling in a wireless network including the first eNB 101 connected to the second eNB 103, according to the embodiments of the present disclosure as disclosed herein. The computing environment of 1516 comprises at least one processing unit that is equipped with a control unit and an Arithmetic Logic Unit (ALU), a clock chip, plurality of networking devices, and a plurality Input output (I/O) devices. The processor module 1516 is responsible for processing the instructions of the algorithm. The processing unit receives commands from the control unit in order to perform its processing. Further, any logical and arithmetic operations involved in the execution of the instructions are computed with the help of the ALU. The overall computing environment can be composed of multiple homogeneous or heterogeneous cores, multiple CPUs of different kinds, special media and other accelerators. The processing unit is responsible for processing the instructions of the algorithm. The algorithm comprising of instructions and codes required for the implementation are stored in either the memory module 1518 or the storage or both. At the time of execution, the instructions may be fetched from the corresponding memory module 1518 or storage unit, and executed by the processing unit. The processing unit synchronizes the operations and executes the instructions based on the timing signals generated by the clock chip. The embodiments of the present disclosure disclosed herein can be implemented through at least one software program running on at least one hardware device and performing network management functions to control the elements. The methods shown in the Figures 8, 9 and 10 include various units, blocks, modules, or steps described in relation with methods, processes, algorithms, or systems of the present disclosure, which can be implemented using any general purpose processor and any combination of programming language, application, and embedded processor.

Further, the memory module 1518 is also configured to store information related to UE operation. The memory module 1518 can be configured to store various configurations like synchronization signal configuration, PRACH configuration, measurement configuration, SCG configuration etc received from the MeNB 101.

The radio resource management module 1520 in the UE 102 is responsible for various aspects like PCell mobility, SCell mobility etc. The radio resource management module 1520 in the UE 102 may be configured to evaluate the handover events and SCell mobility events based on the CRS measurements and BRS measurements respectively.

The display module 1522 in the UE 102 can be configured so that user can input information or information can output on the display for the user to understand some UE operations when the UE is operating in dual connectivity mode of operation. Most of the UE operations are transparent to the user and may not need user input nor output on the display.

When the embodiments are implemented by software, firmware, middleware, or a microcode, a program code, or code segments, they can be stored in a machine-readable medium, such as a storage component. The code segment may indicate a procedure, a function, a sub program, a program, a routine, a sub routine, a module, a software package, a class, or a random combination of commands, data structures, or program description sentences. The code segment may be coupled with another code segment or a hardware circuit by transmitting and/or receiving information, data, factors, parameters, or memory contents. The information, factors, parameters, and data may be transmitted using an arbitrary proper means including memory sharing, message transmission, token transmission, and network transmission.

In order to realize the software, the technologies described herein may be implemented as modules (for example, processes, functions and the like) performing the functions described herein. Software codes may be stored in memory units and executed by processors. The memory units may be implemented inside or outside the processor. In this case, the memory units can be access the processor to be communicable through various means known in the art.

The features of the present invention will be further understood by the following clauses:

Clause 1: An apparatus of performing an initial access by a terminal in wireless communication system, the apparatus comprising; a controller which is configured to transmit capability indication information indicating whether the terminal supports a dual connectivity mode and a high frequency capability support to a Primary Cell to a master eNodeB, receive measurement configuration information including a frequency, a synchronization signal configuration and measurement gap configuration information from the master eNodeB, determine a cell of a secondary eNodeB based on the synchronization signal configuration information, transmit a measurement report message including a cell identifier for the determined cell of the secondary eNodeB and a beam index corresponding to highest signal strength via the master eNodeB, receive information related to a secondary cell group (SCG) configuration from the secondary eNodeB, and perform the initial access based on the information related to the SCG.

Clause 2: The apparatus of clause 1, wherein the master eNodeB supports a previous generation of the wireless communication system and the secondary eNodeB supports a next generation of the wireless communication system, and wherein a radio frame duration of the master eNodeB and a radio frame duration of the secondary eNodeB are identical or radio frame duration of the master eNodeB is integral multiple of the transmission time interval of the secondary eNodeB.

Clause 3: The apparatus of clause 1, wherein the synchronization signal configuration includes at least one of a synchronization signal period, a length of a downlink beam sweeping period, a synchronization signal cycle, a bandwidth of a synchronization signal and a number of downlink fixed beams transmitted during the downlink beam sweeping period.

Clause 4: The apparatus of clause 3, wherein a cell of a secondary eNodeB, a best downlink beam index and radio frame boundary of the cell of a secondary eNodeB is determined based on the synchronization signal configuration information such that resources of the beam reference signals is identified based on the determined cell identifier and the determined downlink beam index.

Clause 5: The apparatus of clause 1, wherein the information related to the SCG is a radio resource control (RRC) container which includes at least one of a cell id, a downlink/uplink bandwidth, physical hybrid-ARQ indicator channel (PHICH) configuration information, physical random access channel (PRACH) configuration information, physical downlink shared channel (PDSCH) configuration information, physical uplink control channel (PUCCH) configuration information, sounding reference signal (SRS) configuration information, uplink power control configuration information, downlink beam mobility measurement configuration information, time division duplexing (TDD) configuration information, media access control (MAC) configuration information, RLC configuration information, packet data convergence protocol (PDCP) configuration information.

Clause 6: The apparatus of clause 5, wherein the PRACH configuration information includes at least one of a PRACH time slot, a PRACH bandwidth, a PRACH frequency offset with respect to lowest indexed resource block of an uplink bandwidth, a preamble repetition period or uplink beam sweeping period, a number of UL fixed beam, and a periodicity of a PRACH opportunity, power ramping step-size and timers associated with random access.

Clause 7: The apparatus of clause 5, wherein the controller is configured to map between a set of random access preambles and a set of downlink coverage beams.

Clause 8: The apparatus of clause 1, wherein the controller is further configured to select a random access preamble based on the determined best downlink beam index and transmit the selected random access preamble on plurality of PRACH time slot associated with the determined cell of a secondary eNodeB.

Clause 9: The apparatus of clause 1, further comprising: receiving a random access response message including at least one of a system frame number, an uplink beam index, a timing advance command, uplink grant, and a cell-radio network temporary identifier (C-RNTI).

Clause 10:A method to be performed by the apparatus of one of clauses 1 to 9.

Clause 11: An apparatus of performing an initial access on a cell of a secondary eNodeB in wireless communication system, the apparatus comprising; a controller which is configured to receive capability indication information indicating whether the terminal supports a dual connectivity mode and a high frequency capability support from a terminal, transmit measurement configuration information including a frequency, a synchronization signal configuration and a measurement gap configuration to a terminal, receive measurement report message related to a cell of the secondary eNodeB if the cell of the secondary eNodeB is determined based on the synchronization signal configuration information, wherein said measurement report message includes a cell identifier and a beam index corresponding to highest signal strength and transmit information related to a secondary cell group (SCG) configuration from the master eNodeB to enable the terminal to perform the initial access on the cell based on the information related to the SCG.

Clause 12: The apparatus of clause 11, wherein the master eNodeB supports a previous generation of the wireless communication system and the secondary eNodeB supports a next generation of the wireless communication system, and wherein a radio frame duration of the master eNodeB and a radio frame duration of the secondary eNodeB are identical or radio frame duration of the master eNodeB is integral multiple of the transmission time interval of the secondary eNodeB.

Clause 13: The apparatus of clause 11, wherein the synchronization signal configuration includes at least one of a synchronization signal period, a length of a downlink beam sweeping period, a synchronization signal cycle, a bandwidth of a synchronization signal and a number of downlink fixed beams transmitted during the downlink beam sweeping period.

Clause 14: A method to be performed by the apparatus of one of clause 11 to 13.

Although the present disclosure has been described with an exemplary embodiment, various changes and modifications may be suggested to one skilled in the art. It is intended that the present disclosure encompass such changes and modifications as fall within the scope of the appended claims.

**Claims**

1.   A method, performed by a user equipment, UE, of performing a cell mobility procedure, the method comprising:

receiving measurement configuration information;
measuring a beam measurement corresponding to each of a plurality of beams of a cell, based on the measurement configuration information; and
determining a cell quality of the cell, based on a result of beam measurements,
wherein a cell mobility procedure is triggered, based on a result of the determining and the cell mobility procedure comprises transmitting a measurement report.

2.   The method of claim 1, wherein the determining of the cell quality based on the result of beam measurements comprises
determining the cell quality, based on a result of performing measurement on a beam with highest strength from among the plurality of beams of the cell.

3.   The method of claim 1, wherein the determining of the cell quality based on the result of beam measurements comprises
determining the cell quality, based on results of measurement performed on at least some beams from among the plurality of beams of the cell.

4.   The method of claim 1, wherein the measurement report comprises index information associated to a beam.

5.   The method of claim 1, further comprising not measuring a beam measurement of a cell comprised in a cell blacklist.

6.   The method of claim 5, further comprising not transmitting a measurement report about the cell comprised in the cell blacklist.

7. The method of claim 1, further comprising performing a beam mobility procedure, wherein the beam mobility procedure is directly processed at least by a physical layer.

8. The method of claim 1, wherein the beam measurement is based on at least one of Cell State Information-Reference Signal, CSI-RS, or a synchronization signal.

9. The method of claim 8, wherein the beam measurement is represent as at least one of Reference Signal Received Power, RSRP, of the CSI-RS, Reference Signal Received Quality, RSRQ, of the CSI-RS, RSRP of the synchronization signal, or RSRQ of the synchronization signal.

10. The method of claim 1, wherein the cell mobility procedure is triggered, when the determined cell quality is greater than a quality of a serving cell by at least a predefined offset value.

11. A user equipment, UE, performing a cell mobility procedure, the UE comprising:

a transceiver; and
a processor coupled with the transceiver and configured to
receive measurement configuration information,
measure a beam measurement corresponding to each of a plurality of beams of a cell, based on the measurement configuration information, and
determine a cell quality of the cell, based on a result of the measuring of beam measurements,
wherein a cell mobility procedure is triggered, based on a result of the determining and the cell mobility procedure comprises transmission of a measurement report.

12. The UE of claim 11, wherein the processor is further configured to determine the cell quality, based on a result of performing measurement on a beam with highest strength from among the plurality of beams of the cell.

13. The UE of claim 11, wherein the processor is further configured to determine the cell quality, based on results of measurement performed on at least some beams from among the plurality of beams of the cell.

14. The UE of claim 11, wherein the measurement report comprises index information associated to a beam.

15. The UE of claim 11, wherein the processor is further configured not to measure a beam measurement of a cell comprised in a cell blacklist.

EP 3 621 400 A1

FIG.1

200

102                                    101                                    103

UE                                     MeNB                                   SeNB

RRC Connection Established
2001

UE Capapbility (DC support, next generation
2002
RAT support, mmWave support)

Measurement configuration (frequency,
2003
synchronization signal configuration)

Detect cells on
configured frequency         2004

RRM Measurement Report
2005                                                                           Cell Addition Request
(Cell Id, DL Beam Index of best beam on                                                               2006
which sync. Signal detected)                    (Cell Id, Best DL Beam Index)

Cell Addition Response
RRC Reconfiguration                                                    2007
2008                                             (Container with SCG Configuration)
(Container with SCG Configuration)

RRC Reconfiguration Complete
2009                                                        Cell Addition Acknowledge
2010

Apply the PRACH
configuration for added SCell         2011

Apply preamble repetition/UL beam sweeping on PRACH opportunity
2012

Detect transmitted
2013            Preamble and UL Beam Index

Random Access Response
2014
(UL TA, UL Grant, C-RNTI, SFN, UL Beam Index)

Random Access successful and start DL/UL data transfer
2015

## FIG.2

300a

| 102 | 101 | 103 |
|---|---|---|
| UE | MeNB | SeNB |

3001a — RRC Connection Established

3002a — UE Capapbility (DC support, next generation RAT support, mmWave support)

3003a — Measurement configuration (frequency, synchronization signal configuration)

Detect cells on configured frequency — 3004a

3005a — RRM Measurement Report (Cell Id, DL Beam Index of best beam on which sync. Signal detected)

Cell Addition Request (Cell Id, Best DL Beam Index) — 3006a

3007a — Derive SFN Offset w.r.t MeNB

3009a — RRC Reconfiguration (Container with SCG Configuration, SFN Offset, 1 Bit Indication)

Cell Addition Response (Container with SCG Configuration, SFN Offset, 1 Bit Indication) — 3008a

3010a — RRC Reconfiguration Complete

Cell Addition Acknowledge — 3011a

Apply SFN Offset to derive SFN of added SCell and PRACH configuration for added SCell — 3012a

Apply preamble repetition/UL beam sweeping on PRACH opportunity — 3013a

3014a — Detect transmitted Preamble and UL Beam Index

3015a — Random Access Response (UL TA, UL Grant, C-RNTI, SFN, UL Beam Index)

3016a — Random Access successful and start DL/UL data transfer

# FIG.3A

EP 3 621 400 A1

FIG.3B

28

FIG.4A

Frequency

Synchronisation Signal Cycle       Synchronisation Signal Cycle

DL Beam Sweeping Period    DL Beam Sweeping Period    DL Beam Sweeping Period    DL Beam Sweeping Period    DL Beam Sweeping Period    DL Beam Sweeping Period

410aa

410a      410aaa      410aaaa      410b      410b

Time

eNodeB side transmission

TX Beam#2

TX Beam#1

420z

410B

420a

TX Beam#M

420b 420c   420y

RX Beam#1     RX Beam#2     RX Beam#3     RX Beam#N     RX Beam#1     RX Beam#2

460a     460b     460c     460d     460a     460b

RX Beam Switching Period RX Beam Switching Period RX Beam Switching Period RX Beam Switching Period

UE side reception      RX Beam Switching Period      RX Beam Switching Period

FIG.4B

EP 3 621 400 A1

30

FIG.5A

FIG.5B

Frequency

Synchronisation
Signal Cycle

Synchronisation
Signal Cycle

Synchronisation
Signal Cycle

DownLink
Carrier

~610a

~610b

~610c

~610d

Time

DL Beam
Sweebing Period

DL Beam
Sweebing Period

DL Beam
Sweebing Period

DL Beam
Sweebing Period

UpLink
Carrier

621a (PRACH
Offset)

~620a

621b (PRACH
Offset)

~620b

Preamble Repetition
Period UL Beam
Sweeping Period

Preamble Repetition
Period UL Beam
Sweeping Period

## FIG.6A

Frequency

Synchronisation Signal Cycle

DownLink
Carrier

~630a

~630b

Time

DL Beam
Sweebing Period

DL Beam
Sweebing Period

UpLink
Carrier

641a (PRACH
Offset)

642a (PRACH
Slot Period)

~640a

~640aa

641b (PRACH
Offset)

642b (PRACH
Slot Period)

~640b

~640bb

Preamble Repetition
Period UL Beam
Sweeping Period

Preamble Repetition
Period UL Beam
Sweeping Period

Preamble Repetition
Period UL Beam
Sweeping Period

Preamble Repetition
Period UL Beam
Sweeping Period

## FIG.6B

FIG.6C

| R | TIMIING ADVANCE COMMAND | | OCT 1 |
|---|---|---|---|
| TIMIING ADVANCE COMMAND | UPLINK GRANT | | OCT 2 |
| UPLINK GRANT | | | OCT 3 |
| UPLINK GRANT | | | OCT 4 |
| TEMPORARY C-RNTI | | | OCT 5 |
| TEMPORARY C-RNTI | | | OCT 6 |
| SYSTEM FRAME NUMBER (712) | | | OCT 7 |
| SYSTEM FRAME NUMBER (710) | UPLINK BEAM INDEX | | OCT 8 |

FIG.7

800

UE Operation

**8001**
Establish RRC Connection on PCell of MeNB and send UE Capability (DC supoort, next generation RAT support, mmWave support)

**8002**
Receive measurement configuration from PCell concerning frequency, synchronization signal configuration

**8003**
Start cell search on configured frequency to detect synchronization signal transmitted by cell(s) on concerned frequency

**8004**
If one or more cells detected then derive Cell Id and identify strongest DL beam of concerned cell by measuring BRS and obtain frame boundary of detected cell(s)

**8005**
Report BRS measurement of one or more detected cell along with Cell Id, DL Beam Index, other assistance information to PCell of MeNB

**8006**
Receive RRC Reconfiguration from PCell and after comprehending the configuration send RRC Reconfiguration Complete to PCell of MeNB

**8007**
Based on Container in the received RRC Reconfiguration identify the added SCell and apply the PRACH configuration of the added cell w.r.t the synchronization signal timing of the added cell

**8008**
Based on PRACH configuration identify the PRACH opportunity and start preamble transmission on each PRACH time slot with initial power estimated from downlink path loss estimated on best DL beam Index and applying different pre-coding for preamble on each PRACH time slot within the PRACH opportunity of added cell

**8009**
Receive random access response from SCell containing at least UL timing advance, UL grant, C-RNTI, System Frame Number, UL Beam Index and other information

**8010**
Complete remaining random access procedure

**8011**
Start UL/DL data transfer on concerned SCell and start reporting CSI measurements for different configured CSI processes

# FIG.8

900

Receive Synchronization Signal configuration that includes at least Synchronization Signal Cycle, Synchronization Signal Period, DL Beam Sweeping Period, Total number of DL fixed beams and other parameters ~9001

If primary and secondary synchronization signal decoded during beam sweeping period? 9002

NO

YES

Determine the Best DL Beam as beam index on which primary and secondary synchronization signal decoded and perform Beam Reference Signal measurements (i.e BRS_RSRP) ~9003

Estimate the time compensation to determine the radio frame boundary as
Time Compensation = Beam Sweeping Period -{(Total number beams - Best DL Beam Index) x Synchronization signal Period} ~9004

# FIG.9

FIG.10

MeNB Operation ~1100

Receive UE Capability (mmWave support) ~1101

Send measurement configuration to UE concerning frequency, synchronization channel configuration of SCell(s) on concerned frequency ~1102

Receive measurement report of one or more detected cell along with Cell Id, DL Beam Index and other assistance information from UE ~1103

If decided to add SeNB based on measurement report; send Cell Addition Request message that includes at least Cell Id and Best DL beam index of one or more cells belonging to SeNB ~1104

Receive Cell Addition Response message from SeNB that includes RRC container for SCG configuration and optionally SFN Offset of concerned SCell w.r.t PCell ~1105

Send RRC Reconfiguration to UE including SCG configuration, SFN Offset and 1 bit indicator concerning how to apply SFN Offset ~1106

Receive RRC Reconfiguration Complete from UE and send Cell Addition acknowledge to SeNB ~1107

# FIG.11

SeNB Operation — 1200

↓

Transmit Synchronization signal and Beam reference signal according to synchronization signal configuration on a set DL fixed beam during beam sweeping period — 1201

↓

Receive Cell Addition Request message from MeNB for a UE that includes at least Cell Id and Best DL beam index of one or more cells belonging to SeNB — 1202

↓

If decided to add SCell; send Cell Addition Response message to MeNB that includes RRC container for SCG configuration and optionally determine SFN Offset of concerned SCell w.r.t Pcell and send to MeNB — 1203

↓

Receive Cell Addition Acknowledge message from MeNB indicating concerned UE comprehended with sent SCG configuration — 1204

↓

Detect random access preamble from concerned UE on the PRACH opportunities during the UL beam sweeping period and identify the preamble index and associated Best DL beam index — 1205

↓

Send random access response to the concerned UE on identified best DL beam index containing at least UL timing advance, UL grant, C-RNTI, System Frame Number, UL Beam Index and other information — 1206

↓

Complete remaining random access procedure i.e receive MSG3 and send Contention resolution message — 1207

FIG.12

FIG.13

FIG.14

EP 3 621 400 A1

MeNB (101) or SeNB (103)

1502
Communication Module

1504
Control Signalling Module

1506
Processor Module

1508
Memory Module

1510
Radio Resource Management Module

FIG.15A

UE (102)

1512
Communication Module

1514
Control Signalling Module

1516
Processor Module

1518
Memory Module

1520
Radio Resource Management Module

1522
Display Module

FIG.15B

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HUAWEI ET AL: "Cell-association enhancements for EBF/FD-MIMO", 3GPP DRAFT; R1-150058, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Athens, Greece; 20150209 - 20150213 8 February 2015 (2015-02-08), XP050933275, Retrieved from the Internet: URL:http://www.3gpp.org/ftp/Meetings_3GPP_SYNC/RAN1/Docs/ [retrieved on 2015-02-08] * the whole document * | 1-15 | INV. H04W74/00 H04W74/08 H04W72/04 H04W56/00 H04W24/10 H04W76/10 |
| X | LG ELECTRONICS: "Discussion on RRM enhancements for FD-MIMO", 3GPP DRAFT; R1-150225, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Athens, Greece; 20150209 - 20150213 8 February 2015 (2015-02-08), XP050933439, Retrieved from the Internet: URL:http://www.3gpp.org/ftp/Meetings_3GPP_SYNC/RAN1/Docs/ [retrieved on 2015-02-08] | 1,11 | TECHNICAL FIELDS SEARCHED (IPC) H04W |
| A | * the whole document * | 2-10, 12-15 | |

-/--

The present search report has been drawn up for all claims

| Place of search | Date of completion of the search | Examiner |
|---|---|---|
| The Hague | 18 November 2019 | Papanikolaou, Eleni |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 19 20 6599

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2015/124748 A1 (PARK KYUNGMIN [KR] ET AL) 7 May 2015 (2015-05-07)<br>* figures 16,17,18 *<br>* paragraphs [0002] - [0026] *<br>* paragraphs [0088] - [0284] * | 1-15 | |
| A | QUALCOMM INCORPORATED: "Discussion on beamformed CSI-RS and feedback enhancements",<br>3GPP DRAFT; R1-153455, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE<br>,<br>vol. RAN WG1, no. Fukuoka, Japan; 20150525 - 20150529<br>1 June 2015 (2015-06-01), XP050978426,<br>Retrieved from the Internet:<br>URL:http://www.3gpp.org/ftp/tsg_ran/WG1_RL1/TSGR1_81/Docs/<br>[retrieved on 2015-06-01]<br>* pages 1-4 * | 1-15 | |
| A | KYOCERA: "Dual connectivity initiation",<br>3GPP DRAFT; R2-141380_DUAL CONNECTIVITY INITIATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE<br>,<br>vol. RAN WG2, no. Valencia, Spain; 20140331 - 20140404<br>22 March 2014 (2014-03-22), XP050817810,<br>Retrieved from the Internet:<br>URL:http://www.3gpp.org/ftp/tsg_ran/WG2_RL2/TSGR2_85bis/Docs/<br>[retrieved on 2014-03-22]<br>* the whole document * | 1-15 | TECHNICAL FIELDS SEARCHED (IPC) |

The present search report has been drawn up for all claims

| Place of search | Date of completion of the search | Examiner |
|---|---|---|
| The Hague | 18 November 2019 | Papanikolaou, Eleni |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 20 6599

This annex lists the patent family members relating to the patent documents cited in the above-mentioned European search report.
The members are as contained in the European Patent Office EDP file on
The European Patent Office is in no way liable for these particulars which are merely given for the purpose of information.

18-11-2019

| Patent document cited in search report | Publication date | Patent family member(s) | Publication date |
|---|---|---|---|
| US 2015124748 A1 | 07-05-2015 | CN 105659688 A | 08-06-2016 |
| | | EP 3064028 A1 | 07-09-2016 |
| | | EP 3518595 A1 | 31-07-2019 |
| | | JP 6190058 B2 | 30-08-2017 |
| | | JP 2016535499 A | 10-11-2016 |
| | | KR 20160058919 A | 25-05-2016 |
| | | US 2015124748 A1 | 07-05-2015 |
| | | WO 2015065129 A1 | 07-05-2015 |

EPO FORM P0459

For more details about this annex : see Official Journal of the European Patent Office, No. 12/82